(19) Europäisches Patentamt / European Patent Office / Office européen des brevets

(11) **EP 4 589 949 A1**

(12) **EUROPEAN PATENT APPLICATION**
published in accordance with Art. 153(4) EPC

(43) Date of publication:
**23.07.2025   Bulletin 2025/30**

(21) Application number: **23865792.8**

(22) Date of filing: **07.09.2023**

(51) International Patent Classification (IPC):
**H04N 19/593** (2014.01)     **H04N 19/105** (2014.01)
**H04N 19/132** (2014.01)     **H04N 19/176** (2014.01)
**H04N 19/13** (2014.01)      **H04N 19/70** (2014.01)
**G06T 9/00** (2006.01)

(52) Cooperative Patent Classification (CPC):
**G06T 9/00; H04N 19/105; H04N 19/13;
H04N 19/132; H04N 19/176; H04N 19/593;
H04N 19/70**

(86) International application number:
**PCT/KR2023/013396**

(87) International publication number:
**WO 2024/058494 (21.03.2024 Gazette 2024/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.09.2022   KR 20220114925**

(71) Applicant: **LG Electronics Inc.**
**Yeongdeungpo-gu**
**Seoul 07336 (KR)**

(72) Inventors:
• **GWAK, Donggyu**
  **Seoul 06772 (KR)**
• **LIM, Jaehyun**
  **Seoul 06772 (KR)**
• **KIM, Chulkeun**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **FEATURE ENCODING/DECODING METHOD AND APPARATUS BASED ON TRAINING OF PREDICTION MODEL, AND RECORDING MEDIUM HAVING BITSTREAM STORED THEREIN**

(57)   The present disclosure provides a feature encoding/decoding method and apparatus and a computer-readable recording medium for storing a bitstream generated by the feature encoding method. The feature decoding method according to the present disclosure may comprise training a prediction model based on reconstructed neighbor samples, predicting a current block by using the trained prediction model, and reconstructing the current block based on residual information of the current block and the predicted current block.

FIG. 9

```
        START
          │
          │  S910
  TRAIN PREDICTION MODEL
          │
          │  S920
   PREDICT CURRENT BLOCK
          │
          │  S930
 RECONSTRUCT CURRENT BLOCK
          │
         END
```

# EP 4 589 949 A1

## Description

## Technical Field

The present disclosure relates to a feature encoding/decoding method and apparatus, and more particularly, to a feature encoding/decoding method and apparatus based on training of a prediction model, and a recording medium storing a bitstream generated by the feature encoding method/apparatus of the present disclosure.

## Background Art

With the development of machine learning technology, demand for image processing-based artificial intelligence services is increasing. In order to effectively process a vast amount of image data required for artificial intelligence services within limited resources, image compression technology optimized for machine task performance is essential. However, existing image compression technology has been developed with the goal of high-resolution, high-quality image processing for human vision, and has the problem of being unsuitable for artificial intelligence services. Accordingly, research and development on new machine-oriented image compression technology suitable for artificial intelligence services is actively underway.

## Disclosure

## Technical Problem

An object of the present disclosure is to provide a feature encoding/decoding method and apparatus with improved encoding/decoding efficiency.

Another object of the present disclosure is to provide a feature encoding/decoding method and apparatus that train a prediction model and use the prediction model for prediction.

Another object of the present disclosure is to provide a feature encoding/decoding method and apparatus that configure a list of completely trained prediction models and utilize one of the prediction models in the list for prediction or as an initial value for training.

Another object of the present disclosure is to provide a method of transmitting a bitstream generated by a feature encoding method or apparatus according to the present disclosure.

Another object of the present disclosure is to provide a recording medium storing a bitstream generated by a feature encoding method or apparatus according to the present disclosure.

Another object of the present disclosure is to provide a recording medium storing a bitstream received, decoded and used to reconstruct a feature by a feature decoding apparatus according to the present disclosure.

The technical problems solved by the present disclosure are not limited to the above technical problems and other technical problems which are not described herein will become apparent to those skilled in the art from the following description.

## Technical Solution

A feature decoding method according to an aspect of the present disclosure, which is performed by a feature decoding apparatus, may comprise training a prediction model based on reconstructed neighbor samples, predicting a current block by using the trained prediction model, and reconstructing the current block based on residual information of the current block and the predicted current block.

A feature encoding method according to another aspect of the present disclosure, which is performed by a feature encoding apparatus, may comprise training a prediction model based on reconstructed neighbor samples, predicting a current block by using the trained prediction model, and encoding residual information that is derived based on the current block and the predicted current block.

A recording medium according to another aspect of the present disclosure may store a bitstream generated by the feature encoding method or the feature encoding apparatus of the present disclosure.

A bitstream transmission method according to another aspect of the present disclosure may transmit a bitstream generated by the feature encoding method or the feature encoding apparatus of the present disclosure to a feature decoding apparatus.

The features briefly summarized above with respect to the present disclosure are merely exemplary aspects of the detailed description below of the present disclosure, and do not limit the scope of the present disclosure.

## Advantageous Effects

According to the present disclosure, it is possible to provide a feature information encoding/decoding method and apparatus with improved encoding/decoding efficiency.

Also, according to the present disclosure, because the number of prediction models available for prediction may be increased actually through training, it is possible to apply a prediction model that is suitable for a feature of a current block.

Also, according to the present disclosure, the amount of bits in a bitstream may be reduced as compared with a variable prediction model.

It will be appreciated by persons skilled in the art that that the effects that can be achieved through the present disclosure are not limited to what has been particularly described hereinabove and other advantages of the present disclosure will be more clearly understood from the detailed description.

## Description of Drawings

FIG. 1 is a view schematically showing a VCM system to which embodiments of the present disclosure are applicable.
FIG. 2 is a diagram schematically showing a VCM pipeline structure to which embodiments of the present disclosure are applicable.
FIG. 3 is a diagram schematically showing an image/video encoder to which embodiments of the present disclosure are applicable.
FIG. 4 is a diagram schematically showing an image/video decoder to which embodiments of the present disclosure are applicable.
FIG. 5 is a flowchart schematically illustrating a feature/feature map encoding procedure to which embodiments of the present disclosure are applicable.
FIG. 6 is a flowchart schematically illustrating a feature/feature map decoding procedure to which embodiments of the present disclosure are applicable.
FIG. 7 is a view showing examples of reconstructed neighbor samples and current encoding/decoding target samples that may be used to train a prediction model.
FIG. 8 is a flowchart showing a feature encoding method according to an embodiment of the present disclosure.
FIG. 9 is a flowchart showing a feature decoding method according to an embodiment of the present disclosure.
FIG. 10 is a flowchart showing a feature encoding method according to another embodiment of the present disclosure.
FIG. 11 is a flowchart showing a feature decoding method according to another embodiment of the present disclosure.
FIG. 12A and FIG. 12B are a flowchart showing a feature encoding method according to still another embodiment of the present disclosure.
FIG. 13A and FIG. 13B are a flowchart showing a feature decoding method according to still another embodiment of the present disclosure.
FIG. 14 is a view showing an example of a content streaming system to which embodiments of the present disclosure are applicable.
FIG. 15 is a view showing another example of a content streaming system to which embodiments of the present disclosure are applicable.

## Mode for Invention

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, in case it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated.

Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

The present disclosure may be applied to a method disclosed in a Versatile Video Coding (VVC) standard and/or a Video Coding for Machines (VCM) standard. In addition, the present disclosure may be applied to a method disclosed in an essential video coding (EVC) standard, AOMedia Video 1 (AV1) standard, 2nd generation of audio video coding standard (AVS2), or a next-generation video/image coding standard (e.g., H.267 or H.268, etc.).

This disclosure provides various embodiments related to video/image coding, and, unless otherwise stated, the embodiments may be performed in combination with each other. In the present disclosure, "video" refers to a set of a series of images according to the passage of time. An "image" may be information generated by artificial intelligence (AI). Input information used in the process of performing a series of tasks by AI, information generated during the information processing process, and the output information may be used as images. In the present disclosure, a "picture" generally refers to a unit representing one image in a specific time period, and a slice/tile is a coding unit constituting a part of a picture in encoding. One picture may be composed of one or more slices/tiles. In addition, a slice/tile may include one or more coding tree units (CTUs). The CTU may be partitioned into one or more CUs. A tile is a rectangular region present in a specific tile row and a specific tile column in a picture, and may be composed of a plurality of CTUs. A tile column may be defined as a rectangular region of CTUs, may have the same height as a picture, and may have a width specified by a syntax element signaled from a bitstream part such as a picture parameter set. A tile row may be defined as a rectangular region of CTUs, may have the same width as a picture, and may have a height specified by a syntax element signaled from a bitstream part such as a picture parameter set. A tile scan is a certain continuous ordering method of CTUs partitioning a picture. Here, CTUs may be sequentially ordered according to a CTU raster scan within a tile, and tiles in a picture may be sequentially ordered according to a raster scan order of tiles of the picture. A slice may contain an integer number of complete tiles, or may contain a continuous integer number of complete CTU rows within one tile of one picture. A slice may be exclusively included in a single NAL unit. One picture may be composed of one or more tile groups. One tile group may include one or more tiles. A brick may indicate a rectangular region of CTU rows within a tile in a picture. One tile may include one or more bricks. The brick may refer to a rectangular region of CTU rows in a tile. One tile may be split into a plurality of bricks, and each brick may include one or more CTU rows belonging to a tile. A tile which is not split into a plurality of bricks may also be treated as a brick.

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In an embodiment, especially when applied to VCM, when there is a picture composed of a set of components having different characteristics and meanings, a pixel/pixel value may represent a pixel/pixel value of a component generated through independent information or combination, synthesis, and analysis of each component. For example, in RGB input, only the pixel/pixel value of R may be represented, only the pixel/pixel value of G may be represented, or only the pixel/pixel value of B may be represented. For example, only the pixel/pixel value of a luma component synthesized using the R, G, and B components may be represented. For example, only the pixel/pixel values of images and information extracted through analysis of R, G, and B components from components may be represented.

In the present disclosure, a "unit" may represent a basic unit of image processing. The unit may include at least one of a specific region of the picture and information related to the region. One unit may include one luma block and two chroma (e.g., Cb and Cr) blocks. The unit may be used interchangeably with terms such as "sample array", "block" or "area" in some cases. In a general case, an M×N block may include samples (or sample arrays) or a set (or array) of transform coefficients of M columns and N rows. In an embodiment, In particular, especially when applied to VCM, the unit may represent a basic unit containing information for performing a specific task.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean "a luma block of a current block" unless explicitly stated as a chroma block. The "chroma block of the current block" may be expressed by including an explicit description of a chroma block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to video/image coding for machines (VCM).

VCM refers to a compression technology that encodes/decodes part of a source image/video or information obtained from the source image/video for the purpose of machine vision. In VCM, the encoding/decoding target may be referred to as a feature. The feature may refer to information extracted from the source image/video based on task purpose, requirements, surrounding environment, etc. The feature may have a different information form from the source image/video, and accordingly, the compression method and expression format of the feature may also be different from those of the video source.

VCM may be applied to a variety of application fields. For example, in a surveillance system that recognizes and tracks objects or people, VCM may be used to store or transmit object recognition information. In addition, in intelligent transportation or smart traffic systems, VCM may be used to transmit vehicle location information collected from GPS, sensing information collected from LIDAR, radar, etc., and various vehicle control information to other vehicles or infrastructure. Additionally, in the smart city field, VCM may be used to perform individual tasks of interconnected sensor nodes or devices.

The present disclosure provides various embodiments of feature/feature map coding. Unless otherwise specified, embodiments of the present disclosure may be implemented individually, or may be implemented in combination of two or more.

## Overview of VCM System

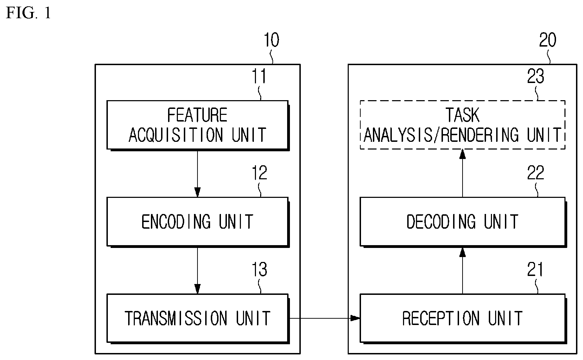

FIG. 1 is a diagram schematically showing a VCM system to which embodiments of the present disclosure are applicable.

Referring to FIG. 1, the VCM system may include an encoding apparatus 10 and a decoding apparatus 20.

The encoding apparatus 10 may generate a bitstream by compressing/encoding a feature/feature map extracted from a source image/video and transmit the generated bitstream to the decoding apparatus 20 through a storage medium or a network. The encoding apparatus 10 may also be referred to as a feature encoding apparatus. In a VCM system, the feature/feature map may be generated at each hidden layer of a neural network. The size and number of channels of the generated feature map may vary depending on the type of neural network or the location of the hidden layer. In the present disclosure, a feature map may be referred to as a feature set, and a feature or a feature map may be referred to as 'feature information'.

The encoding apparatus 10 may include a feature acquisition unit 11, an encoding unit 12, and a transmission unit 13.

The feature acquisition unit 11 may acquire a feature/feature map for the source image/video. Depending on the embodiment, the feature acquisition unit 11 may acquire a feature/feature map from an external device, for example, a feature extraction network. In this case, the feature acquisition unit 11 performs a feature reception interface function. Alternatively, the feature acquisition unit 11 may acquire a feature/feature map by executing a neural network (e.g., CNN, DNN, etc.) using the source image/video as input. In this case, the feature acquisition unit 11 performs a feature extraction network function.

Depending on the embodiment, the encoding apparatus 10 may further include a source image generator (not shown) for acquiring the source image/video. The source image generator may be implemented with an image sensor, a camera module, etc., and may acquire the source image/video through an image/video capture, synthesis, or generation process. In this case, the generated source image/video may be sent to the feature extraction network and used as input data for extracting the feature/feature map.

The encoding unit 12 may encode the feature/feature map acquired by the feature acquisition unit 11. The encoding unit 12 may perform a series of procedures such as prediction, transform, and quantization to increase encoding efficiency. The encoded data (encoded feature/feature map information) may be output in the form of a bitstream. The bitstream containing the encoded feature/feature map information may be referred to as a VCM bitstream.

The transmission unit 13 may obtain feature/feature map information or data output in the form of a bitstream and forward the feature/feature map information or data to the decoding apparatus 20 or another external object through a digital storage medium or network in the form of a file or streaming. Herein, the digital storage medium may include various storage media such as USB, SD, CD, DVD, Blu-ray, HDD, and SSD. The transmission unit 13 may include elements for generating a media file with a predetermined file format or elements for transmitting data through a broadcasting/communication network. The transmission unit 13 may be provided as a separate transmission device from the encoding unit 12, and in this case the transmission device may include at least one processor for obtaining feature/feature map information or data output in the form of a bitstream and a transmission unit for forwarding the feature/feature map information or data in the form of a file or streaming.

The decoding apparatus 20 may acquire feature/feature map information from the encoding apparatus 10 and reconstruct the feature/feature map based on the acquired information.

The decoding apparatus 20 may include a reception unit 21 and a decoding unit 22.

The reception unit 21 may receive a bitstream from the encoding apparatus 10, acquire feature/feature map information from the received bitstream, and send it to the decoding unit 22.

The decoding unit 22 may decode the feature/feature map based on the acquired feature/feature map information. The decoding unit 22 may perform a series of procedures such as dequantization, inverse transform, and prediction corresponding to the operation of the encoding unit 12 to increase decoding efficiency.

Depending on the embodiment, the decoding apparatus 20 may further include a task analysis/rendering unit 23.

The task analysis/rendering unit 23 may perform task analysis based on the decoded feature/feature map. Additionally, the task analysis/rendering unit 23 may render the decoded feature/feature map into a form suitable for task performance. Various machine (oriented) tasks may be performed based on task analysis results and the rendered features/feature map.

As described above, the VCM system may encode/decode the feature extracted from the source image/video according to user and/or machine requests, task purpose, and surrounding environment, and performs various machine (oriented) tasks based on the decoded feature. The VCM system may be implemented by expanding/redesigning the video/image coding system and may perform various encoding/decoding methods defined in the VCM standard.

## VCM pipeline

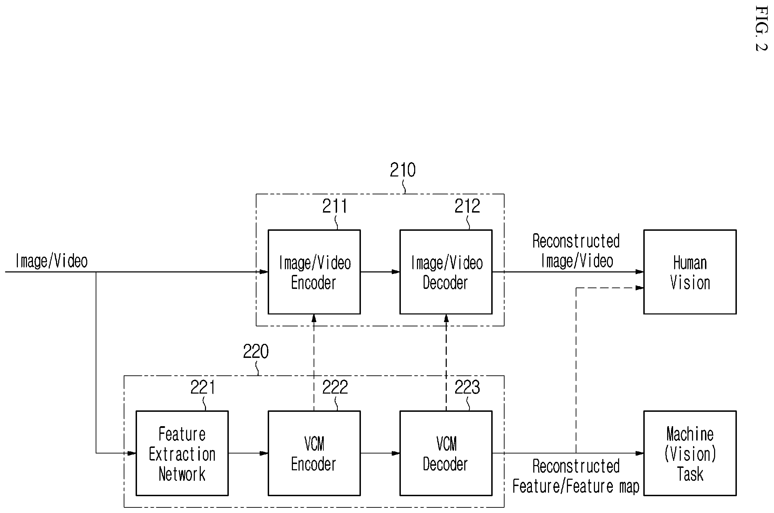

FIG. 2 is a diagram schematically showing a VCM pipeline structure to which embodiments of the present disclosure are applicable.

Referring to FIG. 2, the VCM pipeline 200 may include a first pipeline 210 for encoding/decoding an image/video and a second pipeline 220 for encoding/decoding a feature/feature map. In the present disclosure, the first pipeline 210 may be referred to as a video codec pipeline, and the second pipeline 220 may be referred to as a feature codec pipeline.

The first pipeline 210 may include a first stage 211 for encoding an input image/video and a second stage 212 for decoding the encoded image/video to generate a reconstructed image/video. The reconstructed image/video may be used for human viewing, that is, human vision.

The second pipeline 220 may include a third stage 221 for extracting a feature/feature map from the input image/video, a fourth stage 222 for encoding the extracted feature/feature map, and a fifth stage 223 for decoding the encoded feature/feature map to generate a reconstructed feature/feature map. The reconstructed feature/feature map may be used for a machine (vision) task. Here, the machine (vision) task may refer to a task in which images/videos are consumed by a machine. The machine (vision) task may be applied to service scenarios such as, for example, Surveillance, Intelligent Transportation, Smart City, Intelligent Industry, Intelligent Content, etc. Depending on the embodiment, the reconstructed feature/feature map may be used for human vision.

Depending on the embodiment, the feature/feature map encoded in the fourth stage 222 may be transferred to the first stage 221 and used to encode the image/video. In this case, an additional bitstream may be generated based on the encoded feature/feature map, and the generated additional bitstream may be transferred to the second stage 222 and used to decode the image/video.

Depending on the embodiment, the feature/feature map decoded in the fifth stage 223 may be transferred to the second stage 222 and used to decode the image/video.

FIG. 2 shows a case where the VCM pipeline 200 includes a first pipeline 210 and a second pipeline 220, but this is merely an example and embodiments of the present disclosure are not limited thereto. For example, the VCM pipeline 200 may include only the second pipeline 220, or the second pipeline 220 may be expanded into multiple feature codec pipelines.

Meanwhile, in the first pipeline 210, the first stage 211 may be performed by an image/video encoder, and the second stage 212 may be performed by an image/video decoder. Additionally, in the second pipeline 220, the third stage 221 may be performed by a VCM encoder (or feature/feature map encoder), and the fourth stage 222 may be performed by a VCM decoder (or feature/feature map encoder). Hereinafter, the encoder/decoder structure will be described in detail.

**Encoder**

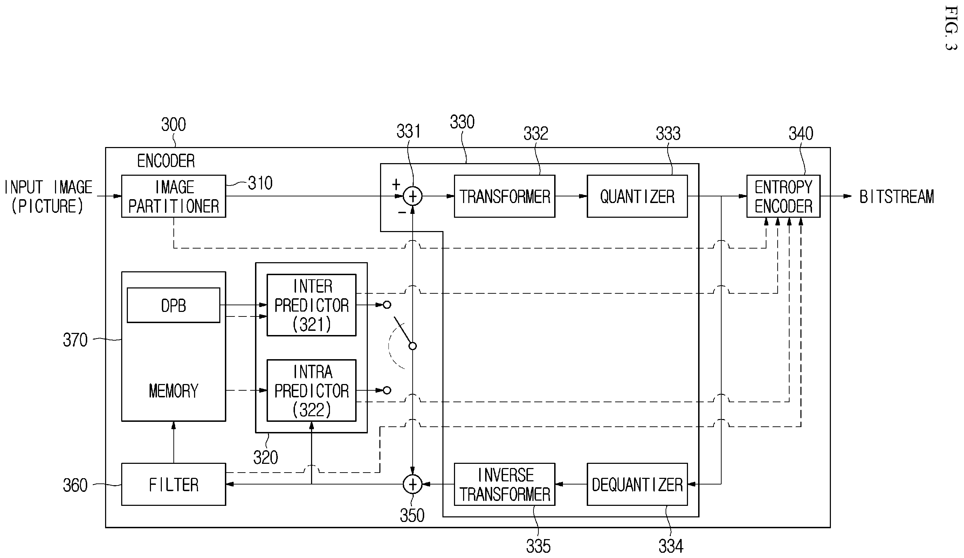

FIG. 3 is a diagram schematically showing an image/video encoder to which embodiments of the present disclosure are applicable.

Referring to FIG. 3, the image/video encoder 300 may further include an image partitioner 310, a predictor 320, a residual processor 330, an entropy encoder 340, and an adder 350, a filter 360, and a memory 370. The predictor 320 may include an inter predictor 321 and an intra predictor 322. The residual processor 330 may include a transformer 332, a quantizer 333, a dequantizer 334, and an inverse transformer 335. The residual processor 330 may further include a subtractor 331. The adder 350 may be referred to as a reconstructor or a reconstructed block generator. The image partitioner 310, the predictor 320, the residual processor 330, the entropy encoder 340, the adder 350, and the filter 360 may be configured by one or more hardware components (e.g., encoder chipset or processor) depending on the embodiment. Additionally, the memory 370 may include a decoded picture buffer (DPB) and may be configured by a digital storage medium. The hardware components described above may further include a memory 370 as an internal/external component.

The image partitioner 310 may partition an input image (or picture, frame) input to the image/video encoder 300 into one or more processing units. As an example, the processing unit may be referred to as a coding unit (CU). The coding unit may be recursively partitioned according to a quad-tree binary-tree ternary-tree (QTBTTT) structure from a coding tree unit (CTU) or largest coding unit (LCU). For example, one coding unit may be partitioned into a plurality of coding units of deeper depth based on a quad tree structure, binary tree structure, and/or ternary structure. In this case, for example, the quad tree structure may be applied first and the binary tree structure and/or ternary structure may be applied later. Alternatively, the binary tree structure may be applied first. The image/video coding procedure according to the present disclosure may be performed based on a final coding unit that is no longer partitioned. In this case, the largest coding unit may be used as the final coding unit based on coding efficiency according to image characteristics, or, if necessary, the coding unit may be recursively partitioned into coding units of deeper depth to use a coding unit with an optimal size as the final coding unit. Here, the coding procedure may include procedures such as prediction, transform, and reconstruction, which will be described later. As another example, the processing unit may further include a prediction unit (PU) or a transform unit (TU). In this case, the prediction unit and the transform unit may each be divided or partitioned from the final coding unit described above. The prediction unit may be a unit of sample prediction, and the transform unit may be a unit for deriving a transform coefficient and/or a unit for deriving a residual signal from the transform coefficient.

In some cases, the unit may be used interchangeably with terms such as block or area. In a general case, an MxN block may represent a set of samples or transform coefficients consisting of M columns and N rows. A sample may generally represent a pixel or a pixel value, and may represent only a pixel/pixel value of a luma component, or only a pixel/pixel value of a chroma component. The sample may be used as a term corresponding to pixel or pel.

The image/video encoder 300 may generate a residual signal (residual block, residual sample array) by subtracting a prediction signal (predicted block, prediction sample array) output from the inter predictor 321 or the intra predictor 322 from the input image signal (original block, original sample array) and transmit the generated residual signal to the transformer 332. In this case, as shown, the unit that subtracts the prediction signal (prediction block, prediction sample array) from the input image signal (original block, original sample array) within the image/video encoder 300 may be referred to as the subtractor 331. The predictor may perform prediction on a processing target block (hereinafter referred to as a current block) and generate a predicted block including prediction samples for the current block. The predictor may determine whether intra prediction or inter prediction is applied in current block or CU units. The predictor may generate various information related to prediction, such as prediction mode information, and transfer it to the entropy encoder 340. Information about prediction may be encoded in the entropy encoder 340 and output in the form of a bitstream.

The intra predictor 322 may predict the current block by referring to the samples in the current picture. At this time, the referenced samples may be located in the neighbor of the current block or may be located away from the current block, depending on the prediction mode. In intra prediction, the prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on settings. The intra predictor 322 may determine the prediction mode applied to the current block by using a prediction mode applied to a neighboring block.

The inter predictor 321 may derive a predicted block for the current block based on a reference block (reference sample array) specified by a motion vector on a reference picture. In this case, in order to reduce the amount of motion information transmitted in the inter prediction mode, the motion information may be predicted in block, subblock, or sample units based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 321 may construct a motion information candidate list based on neighboring blocks and generate information indicating which candidate is used to derive a motion vector and/or reference picture index of the current block. Inter prediction may be performed based on various prediction modes, and, for example, in the case of a skip mode and a merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and a motion vector difference may be signaled to indicate the motion vector of the current block.

The predictor 320 may generate a prediction signal based on various prediction methods. For example, the predictor may not only apply intra prediction or inter prediction but also simultaneously apply both intra prediction and inter prediction, for prediction of one block. This may be called combined inter and intra prediction (CIIP). In addition, the predictor may be based on an intra block copy (IBC) prediction mode or a palette mode for prediction of the block. The IBC prediction mode or the palette mode may be used for content image/video coding of a game or the like, for example, screen content coding (SCC). IBC basically performs prediction within the current picture, but may be performed similarly to inter prediction in that a reference block is derived within the current picture. That is, IBC may use at least one of the inter prediction techniques described in the present disclosure. The palette mode may be regarded as an example of intra coding or intra prediction. When the palette mode is applied, the sample values within the picture may be signaled based on information about a palette table and a palette index.

The prediction signal generated by the predictor 320 may be used to generate a reconstructed signal or to generate a residual signal. The transformer 332 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT refers to transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to non-square blocks having a variable size.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may reorder quantized transform coefficients in a block form into a one-dimensional vector form based on a coefficient scan order and generate information on the quantized transform coefficients based on the quantized transform coefficients in the one-dimensional vector form. The entropy encoder 340 may perform various encoding methods such as, for example, exponential Golomb, context-adaptive variable length coding (CAVLC), context-adaptive binary arithmetic coding (CABAC), and the like. The entropy encoder 340 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In addition, the video/image information may further include a method of generating and using encoded information, a purpose, and the like. In the present disclosure, information and/or syntax elements transferred/signaled from the image/video encoder to the image/video decoder may be included in image/video information. The image/video information may be encoded through the above-described encoding procedure and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 340 and/or a storage unit (not shown) storing the signal may be configured as internal/external element of the image/video encoder 300, or the transmitter may be included in the entropy encoder 340.

The quantized transform coefficients output from the quantizer 130 may be used to generate a prediction signal. For example, the residual signal (residual block or residual samples) may be reconstructed by applying dequantization and inverse transform to the quantized transform coefficients through the dequantizer 334 and the inverse transformer 335. The adder 350 adds the reconstructed residual signal to the prediction signal output from the inter predictor 321 or the intra predictor 322 to generate a reconstructed signal (reconstructed picture, reconstructed block, reconstructed sample array). In a case where there is no residual for the processing target block, such as a case where the skip mode is applied, the predicted block may be used as the reconstructed block. The adder 350 may be called a reconstructor or a reconstructed block generator. The generated reconstructed signal may be used for intra prediction of a next processing target block in the current picture and may be used for inter prediction of a next picture through filtering as described below.

Meanwhile, luma mapping with chroma scaling (LMCS) is applicable in a picture encoding and/or reconstruction process.

The filter 360 may improve subjective/objective image quality by applying filtering to the reconstructed signal. For example, the filter 360 may generate a modified reconstructed picture by applying various filtering methods to the reconstructed picture, and store the modified reconstructed picture in the memory 370, specifically, a DPB of the memory 370. The various filtering methods may include, for example, deblocking filtering, a sample adaptive offset, an adaptive loop filter, a bilateral filter, and the like. The filter 360 may generate various information related to filtering and transmit the generated information to the entropy encoder 190. The information related to filtering may be encoded by the entropy encoder 340 and output in the form of a bitstream.

The modified reconstructed picture transmitted to the memory 370 may be used as the reference picture in the inter predictor 321. Through this, prediction mismatch between the encoder and the decoder may be avoided and encoding efficiency may be improved.

The DPB of the memory 370 may store the modified reconstructed picture for use as a reference picture in the inter predictor 321. The memory 370 may store the motion information of the block from which the motion information in the current picture is derived (or encoded) and/or the motion information of the blocks in the already reconstructed picture. The stored motion information may be transferred to the inter predictor 321 for use as the motion information of the spatial neighboring block or the motion information of the temporal neighboring block. The memory 370 may store reconstructed samples of reconstructed blocks in the current picture and may transfer the stored reconstructed samples to the intra predictor 322.

Meanwhile, the VCM encoder (or feature/feature map encoder) basically performs a series of procedures such as prediction, transform, and quantization to encode the feature/feature map and thus may basically have the same/similar structure as the image/video encoder 300 described with reference to FIG. 3. However, the VCM encoder is different from the image/video encoder 300 in that the feature/feature map is an encoding target, and thus may be different from the image/video encoder 300 in the name of each unit (or component) (e.g., image partitioner 310, etc.) and its specific operation content. The specific operation of the VCM encoder will be described in detail later.

## Decoder

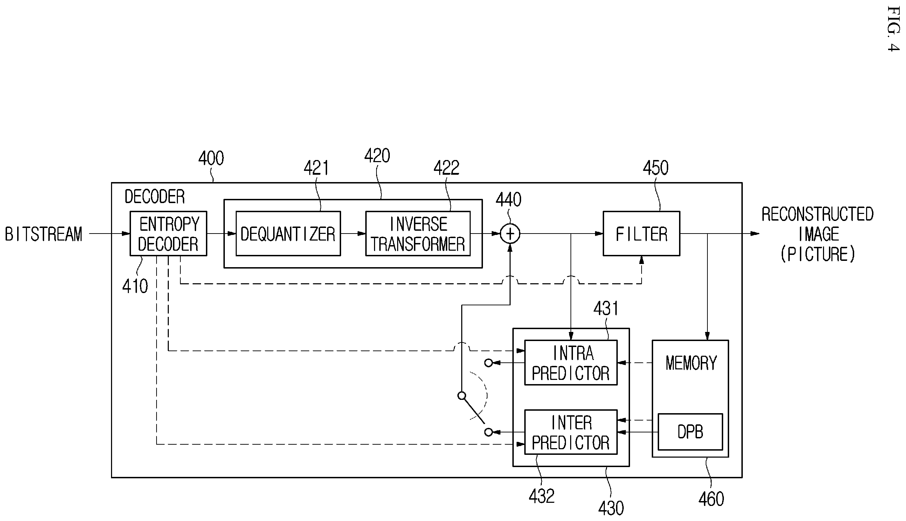

FIG. 4 is a diagram schematically showing an image/video decoder to which embodiments of the present disclosure are applicable.

Referring to FIG. 4, the image/video decoder 400 may include an entropy decoder 410, a residual processor 420, a predictor 430, an adder 440, a filter 450 and a memory 460. The predictor 430 may include an inter predictor 431 and an intra predictor 432. The residual processor 420 may include a dequantizer 421 and an inverse transformer 422. The entropy decoder 410, the residual processor 420, the predictor 430, the adder 440, and the filter 450 may be configured by one hardware component (e.g., a decoder chipset or processor) depending on the embodiment. Additionally, the memory 460 may include a decoded picture buffer (DPB) and may be configured by a digital storage medium. The hardware component may further include the memory 460 as an internal/external component.

When a bitstream containing video/image information is input, the image/video decoder 400 may reconstruct an image/video in correspondence with the process in which the image/video information is processed in the image/video encoder 300 of FIG. 3. For example, the image/video decoder 400 may derive units/blocks based on block partition-related information acquired from the bitstream. The image/video decoder 400 may perform decoding using a processing unit applied in the image/video encoder. Accordingly, the processing unit of decoding may, for example, be a coding unit, and the coding unit may be partitioned from a coding tree unit or a largest coding unit according to a quad tree structure, a binary tree structure and/or a ternary tree structure. One or more transform units may be derived from the coding unit. In addition, the reconstructed image signal decoded and output through the image/video decoder 400 may be played through a playback device.

The image/video decoder 400 may receive a signal output from the encoder of FIG. 3 in the form of a bitstream, and decode the received signal through the entropy decoder 410. For example, the entropy decoder 410 may parse the bitstream to derive information (e.g., image/video information) necessary for image reconstruction (or picture reconstruction). The image/video information may further include information about various parameter sets, such as an adaptation parameter set (APS), picture parameter set (PPS), sequence parameter set (SPS), or video parameter set (VPS). Additionally, image/video information may further include general constraint information. Additionally, the image/video information may include a method of generating and using decoded information, a purpose, and the like. The image/video decoder 400 may decode the picture further based on information about the parameter set and/or general constraint information. The signaled/received information and/or syntax elements may be decoded and acquired from the bitstream through a decoding procedure. For example, the entropy decoder 410 may decode information in the bitstream based on a coding method such as exponential Golomb coding, CAVLC, or CABAC, and output the values of syntax elements necessary for image reconstruction and quantized values of transform coefficients related to residuals. More specifically, in the CABAC entropy decoding method, a bin corresponding to each syntax element may be received in the bitstream, a context model may be determined using decoding target syntax element information and decoding information of neighboring and decoding target blocks or information on the symbol/bin decoded in the previous step, the occurrence probability of the bin may be predicted according to the determined context model, and arithmetic decoding of the bin may be performed to generate a symbol corresponding to the value of each syntax element. At this time, the CABAC entropy decoding method may update the context model using the information on the decoded symbol/bin for the context model of the next symbol/bin after determining the context model. Information about prediction among the information decoded in the entropy decoder 410 is provided to the predictor (inter predictor 432 and intra predictor 431), and a residual value obtained by performing entropy decoding in the entropy decoder 410, that is, quantized transform coefficients and related parameter information may be input to the residual processor 420. The residual processor 420 may derive a residual signal (residual block, residual samples, residual sample array). Additionally, information about filtering among the information decoded by the entropy decoder 410 may be provided to the filter 450. Meanwhile, a receiver (not shown) that receives a signal output from the image/video encoder may be further configured as an internal/external element of the image/video decoder 400, or the receiver may be a component of the entropy decoder 410. Meanwhile, the image/video decoder according to the present disclosure may be called an image/video decoding apparatus, and the image/video decoder may be divided into an information decoder (image/video information decoder) and a sample decoder (image/video sample decoder). In this case, the information decoder may include an entropy decoder 410, and the sample decoder may include at least one of a dequantizer 321, an inverse transformer 322, an adder 440, a filter 450, and a memory 460, an inter predictor 432 or an intra predictor 431.

The dequantizer 421 may dequantize the quantized transform coefficients and output transform coefficients. The dequantizer 421 may rearrange the quantized transform coefficients into a two-dimensional block form. In this case, rearranging may be performed based on the coefficient scan order performed in the image/video encoder. The dequantizer 321 may perform dequantization on quantized transform coefficients using quantization parameters (e.g., quantization step size information) and acquire transform coefficients.

The inverse transformer 422 inversely transforms the transform coefficients to acquire a residual signal (residual block, residual sample array).

The predictor 430 may perform prediction on the current block and generate a predicted block including prediction samples for the current block. The predictor may determine whether intra prediction or inter prediction is applied to the current block based on information about prediction output from the entropy decoder 410, and may determine a specific intra/inter prediction mode.

The predictor 420 may generate a prediction signal based on various prediction methods. For example, the predictor may not only apply intra prediction or inter prediction for prediction of one block, but also may apply intra prediction and inter prediction simultaneously. This may be called combined inter and intra prediction (CIIP). Additionally, the predictor may be based on an intra block copy (IBC) prediction mode or a palette mode for prediction of a block. The IBC prediction mode or palette mode may be used, for example, for image/video coding of content such as games, such as screen content coding (SCC). In IBC, prediction is basically performed within the current picture, but may be performed similarly to inter prediction in that a reference block is derived within the current picture. That is, IBC may use at least one of the inter prediction techniques described in this document. The palette mode may be viewed as an example of intra coding or intra prediction. When the palette mode is applied, information about the palette table and palette index may be included and signaled in the image/video information.

The intra predictor 431 may predict the current block by referencing samples in the current picture. The referenced samples may be located in the neighbor of the current block, or may be located away from the current block, depending on the prediction mode. In intra prediction, prediction modes may include a plurality of non-directional modes and a plurality of directional modes. The intra predictor 431 may determine the prediction mode applied to the current block using the prediction mode applied to the neighboring block.

The inter predictor 432 may derive a predicted block for the current block based on a reference block (reference sample array) specified by a motion vector in the reference picture. At this time, in order to reduce the amount of motion information transmitted in the inter prediction mode, motion information may be predicted in block, subblock, or sample units based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, neighboring blocks may include a spatial neighboring block present in the current picture and a temporal neighboring block present in the reference picture. For example, the inter predictor 432 may construct a motion information candidate list based on neighboring blocks and derive a motion vector and/or reference picture index of the current block based on received candidate selection information. Inter prediction may be performed based on various prediction modes, and information about prediction may include information indicating the mode of inter prediction for the current block.

The adder 440 may generate a reconstructed signal (reconstructed picture, reconstructed block, reconstructed sample array) by adding the acquired residual signal to a prediction signal (predicted block, prediction sample array) output from the predictor (including the inter predictor 432 and/or the intra predictor 431). If there is no residual for a processing target block, such as when skip mode is applied, the predicted block may be used as a reconstruction block.

The adder 440 may be called a reconstructor or a reconstruction block generator. The generated reconstructed signal may be used for intra prediction of a next processing target block in the current picture, may be output after filtering as described later, or may be used for inter prediction of a next picture.

Meanwhile, luma mapping with chroma scaling (LMCS) is applicable in a picture decoding process.

The filter 450 can improve subjective/objective image quality by applying filtering to the reconstructed signal. For example, the filter 450 may generate a modified reconstructed picture by applying various filtering methods to the reconstructed picture, and transmit the modified reconstructed picture in the memory 460, specifically the DPB of the memory 460. Various filtering methods may include, for example, deblocking filtering, sample adaptive offset, adaptive loop filter, bilateral filter, etc.

The (modified) reconstructed picture stored in the DPB of the memory 460 may be used as a reference picture in the inter predictor 432. The memory 460 may store motion information of a block from which motion information in the current picture is derived (or decoded) and/or motion information of blocks in an already reconstructed picture. The stored motion information may be transferred to the inter predictor 432 for use as motion information of spatial neighboring blocks or motion information of temporal neighboring blocks. The memory 460 may store reconstructed samples of reconstructed blocks in the current picture and transfer them to the intra predictor 431.

Meanwhile, the VCM decoder (or feature/feature map decoder) performs a series of procedures such as prediction, inverse transform, and dequantization to decode the feature/feature map, and may basically have the same/similar structure as the image/video decoder 400 described above with reference to FIG. 4. However, the VCM decoder is different from the image/video decoder 400 in that the feature/feature map is a decoding target, and may be different from the image/video decoder 400 in the name (e.g., DPB, etc.) of each unit (or component) and its specific operation. The operation of the VCM decoder may correspond to the operation of the VCM encoder, and the specific operation will be described in detail later.

## Feature/feature map encoding procedure

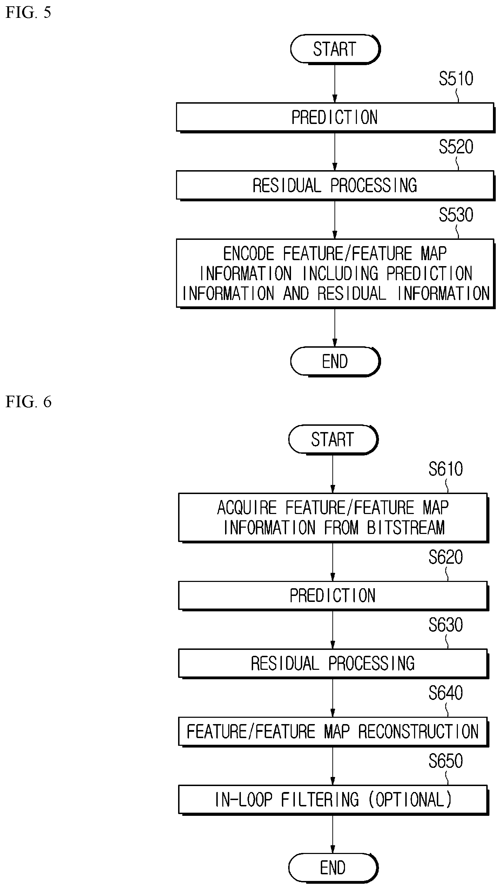

FIG. 5 is a flowchart schematically illustrating a feature/feature map encoding procedure to which embodiments of the present disclosure are applicable.

Referring to FIG. 5, the feature/feature map encoding procedure may include a prediction procedure (S510), a residual processing procedure (S520), and an information encoding procedure (S530).

The prediction procedure (S510) may be performed by the predictor 320 described above with reference to FIG. 3.

Specifically, the intra predictor 322 may predict a current block (that is, a set of current encoding target feature elements) by referencing feature elements in a current feature/feature map. Intra prediction may be performed based on the spatial similarity of feature elements constituting the feature/feature map. For example, feature elements included in the same region of interest (RoI) within an image/video may be estimated to have similar data distribution characteristics. Accordingly, the intra predictor 322 may predict the current block by referencing the already reconstructed feature elements within the region of interest including the current block. At this time, the referenced feature elements may be located adjacent to the current block or may be located away from the current block depending on the prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of the image/video encoding procedure. Additionally, the directional modes may include prediction modes corresponding to, for example, 33 directional modes or 65 directional modes of an image/video encoding procedure. However, this is an example, and the type and number of intra prediction modes may be set/changed in various ways depending on the embodiment.

The inter predictor 321 may predict the current block based on a reference block (i.e., a set of referenced feature elements) specified by motion information on the reference feature/feature map. Inter prediction may be performed based on the temporal similarity of feature elements constituting the feature/feature map. For example, temporally consecutive features may have similar data distribution characteristics. Accordingly, the inter predictor 321 may predict the current block by referencing the already reconstructed feature elements of features temporally adjacent to the current feature. At this time, motion information for specifying the referenced feature elements may include a motion vector and a reference feature/feature map index. The motion information may further include information about an inter prediction direction (e.g., L0 prediction, L1 prediction, Bi prediction, etc.). In the case of inter prediction, neighboring blocks may include spatial neighboring blocks present within the current feature/feature map and temporal neighboring blocks present within the reference feature/feature map. A reference feature/feature map including a reference block and a reference feature/-feature map including a temporal neighboring block may be the same or different. The temporal neighboring block may be referred to as a collocated reference block, etc., and a reference feature/feature map including a temporal neighboring block may be referred to as a collocated feature/feature map. The inter predictor 321 may construct a motion information candidate list based on neighboring blocks and generate information indicating which candidate is used to derive the motion vector and/or reference feature/feature map index of the current block. Inter prediction may be performed based on various prediction modes. For example, in the case of the skip mode and the merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block is used as a motion vector predictor, and the motion vector of the current block may be indicated by signaling the motion vector difference. The predictor 320 may generate a prediction signal based on various prediction methods in addition to intra prediction and inter prediction described above.

The prediction signal generated by the predictor 320 may be used to generate a residual signal (residual block, residual feature elements) (S520). The residual processing procedure (S520) may be performed by the residual processor 330 described above with reference to FIG. 3. In addition, (quantized) transform coefficients may be generated through a transform and/or quantization procedure for the residual signal, and the entropy encoder 340 may encode information about the (quantized) transform coefficients in the bitstream as residual information (S530). Additionally, the entropy encoder 340 may encode information necessary for feature/feature map reconstruction, such as prediction information (e.g., prediction mode information, motion information, etc.), in the bitstream, in addition to the residual information.

Meanwhile, the feature/feature map encoding procedure may further include not only a procedure (S530) for encoding information for feature/feature map reconstruction (e.g., prediction information, residual information, partitioning information, etc.) and outputting it in the form of a bitstream, a procedure for generating a reconstructed feature/feature map for the current feature/feature map and a procedure (optional) for applying in-loop filtering to the reconstructed feature/feature map.

The VCM encoder may derive (modified) residual feature(s) from the quantized transform coefficient(s) through dequantization and inverse transform, and generate a reconstructed feature/feature map based on the predicted feature(s) and (modified) residual feature(s) that are the output of step S510. The reconstructed feature/feature map generated in this way may be the same as the reconstructed feature/feature map generated in the VCM decoder. When an in-loop filtering procedure is performed on the reconstructed feature/feature map, a modified reconstructed feature/-feature map may be generated through the in-loop filtering procedure on the reconstructed feature/feature map. The modified reconstructed feature/feature map may be stored in a decoded feature buffer (DFB) or memory and used as a reference feature/feature map in the feature/feature map prediction procedure later. Additionally, (in-loop) filtering-related information (parameters) may be encoded and output in the form of a bitstream. Through the in-loop filtering procedure, noise that may occur during feature/feature map coding may be removed, and feature/feature map-based task performance may be improved. In addition, by performing an in-loop filtering procedure at both the encoder stage and the decoder stage, the identity of the prediction result can be guaranteed, the reliability of feature/feature map coding can be improved, and the amount of data transmission for feature/feature map coding can be reduced.

### Feature/feature map decoding procedure

FIG. 6 is a flowchart schematically illustrating a feature/feature map decoding procedure to which embodiments of the present disclosure are applicable.

Referring to FIG. 6, the feature/feature map decoding procedure may include an image/video information acquisition procedure (S610), a feature/feature map reconstruction procedure (S620 to S640), and an in-loop filtering procedure for a reconstructed feature/feature map (S650). The feature/feature map reconstruction procedure may be performed on the prediction signal and residual signal acquired through inter/intra prediction (S620) and residual processing (S630), dequantization and inverse transform process for quantized transform coefficients described in the present disclosure. A modified reconstructed feature/feature map may be generated through an in-loop filtering procedure for the reconstructed feature/feature map, and the modified reconstructed feature/feature map may be output as a decoded feature/feature map. The decoded feature/feature map may be stored in a decoded feature buffer (DFB) or memory and used as a reference feature/feature map in the inter prediction procedure when decoding the feature/feature map. In some cases, the above-described in-loop filtering procedure may be omitted. In this case, the reconstructed feature/feature map may be output without change as a decoded feature/feature map, and stored in the decoded feature buffer (DFB) or memory, and then be used as a reference feature/feature map in the inter prediction procedure when decoding the feature/feature map.

## Embodiment

In case a compressed bitstream of an image is generated to perform a machine task, in the related art, any one of predetermined prediction models is selected to perform intra prediction.

As the number of selectable prediction models is limited, the related art may be insufficient to apply a prediction model suitable for a feature of a current block and thus may increase the amount of bits of a bitstream.

In case a variable prediction model is applied for performing prediction suitable for a feature of a current block, it is necessary to use a same parameter on both a feature encoding device 10 and a feature decoding device 20. Accordingly, a parameter of a prediction model used in the feature encoding device 10 needs to be transmitted to the feature decoding device 20, and an increase in the variability of the prediction model may also increase the number of corresponding parameters, which may increase the amount of bits of a bitstream.

The present disclosure proposes a method for performing intra prediction of a current block not only by using a prediction model, which is already completely trained and thus has a predetermined parameter, but also through a prediction model using a new learned parameter that is learned by using reconstructed neighbor reference samples (reconstructed neighbor samples).

In addition, the present disclosure proposes a method for storing a completely learned parameter in a list and then using one of parameters in the list as a parameter for predicting a current block. Furthermore, the present disclosure proposes a method for using one of parameters in a list as an initial value of training for predicting a current block.

Thus, through the present disclosure, if a compressed bitstream of an image is generated to perform a machine task, a bitstream with a small size (a small amount of bits) may enable the machine task to be performed at a similar level of accuracy as compared with an existing method.

Embodiments described in the present disclosure may be operated separately or in a combination thereof.

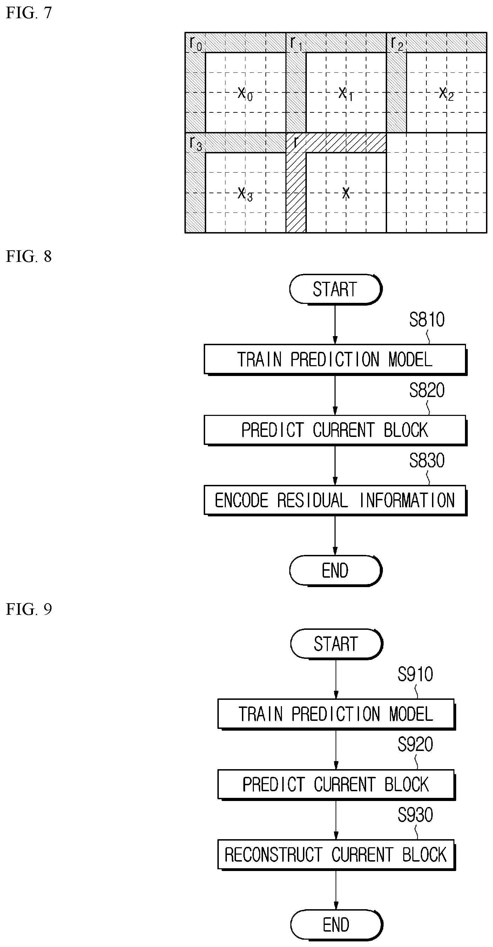

FIG. 8 is a flowchart showing a feature encoding method according to an embodiment of the present disclosure.

Referring to FIG. 8, the feature encoding device 10 may train a prediction model based on reconstructed neighbor samples (S810). A 'prediction model' may be a 'parameter of the prediction model', and 'training of the prediction model' may be 'training for the parameter of the prediction model'. Training for the prediction model may be performed n or more times (n is an integer equal to or greater than 0).

The reconstructed neighbor samples may be samples that are decoded through training-based intra prediction, or samples that are decoded by using an existing intra prediction method. In addition, the reconstructed neighbor samples may be samples that are decoded by using other prediction methods including inter prediction.

Examples of reconstructed neighbor samples and current encoding/decoding target samples (current sample or a current block), which are available for the training of the prediction model, are shown in FIG. 7. Referring to FIG. 7, samples in an area marked with a vector x represent the current encoding/decoding target samples, and samples in areas marked with r, r0, r1, r2, r3, x0, x1, x2 and x3 represent reconstructed neighbor samples adjacent to the left and above the current block.

The positional distribution, shape and number of the neighbor samples, which are used as training data in FIG. 7, are merely one example for convenience of description, and real neighbor samples may have a different distribution, shape or number from the examples of FIG. 7. For example, reconstructed neighbor samples, which are used as training data to ensure the independence of encoding and decoding of an intra prediction mode, may be restricted to be used only in an intra encoding and decoding mode or may be restricted to be used only in a predefined identical encoding and decoding unit such as tile, slice, and the like.

In case values of samples (current samples) x of a current block are predicted by using values of reconstructed neighbor samples r, the value $x_{pred}$ of prediction samples predicted by a prediction model f with a parameter $\theta_t$ may be expressed as shown in Equation 1.

[Equation 1]

$$x_{pred} = f(r\,;\,\theta_t)$$

In Equation 1, $\theta_t$ represents a parameter value of a prediction model that is subject to a training process t times according to a predetermined training method.

The process of training $\theta_t$ may be described as an optimization process that repeatedly searches for $\theta_t$ minimizing a loss function $L_{tr}$, which may be represented by a sum of L2 Norms, as expressed in Equation 2.

[Equation 2]

$$L_{tr} = \sum_n \| x_n - f(r_n \; ; \; \theta_t) \|_2$$

As shown in Equation 2, the process of training $\theta_t$ may start with an initial value and have N pairs of reconstructed reference samples $\{r_o, x_0\}, \{r_1, x_1\}, \{r_2, x_2\}, \{r_3, x_3\}, ..., \{r_N, x_N\}$ as training data and a reconstructed $x_N$ as input. The loss function of Equation 2 is merely one example for convenience of description, and a different equation may be used.

The feature encoding device 10 may predict the current block by using the trained prediction model (S820). The feature encoding device 10 may generate residual information for the current block based on the predicted current block (prediction block) and the current block and encode the generated residual information (S830).

FIG. 9 is a flowchart showing a feature decoding method according to an embodiment of the present disclosure.

Referring to FIG. 9, the feature decoding device 20 may train a prediction model based on reconstructed neighbor samples (S910).

The prediction model may be a parameter of the prediction model, and training of the prediction model may be training for the parameter of the prediction model. Training for the prediction model may be performed n or more times (n is an integer equal to or greater than 0).

The reconstructed neighbor samples may be samples that are decoded through training-based intra prediction, or samples that are decoded by using an existing intra prediction method. In addition, the reconstructed neighbor samples may be samples that are decoded by using other prediction methods including inter prediction. Examples of the reconstructed neighbor samples and current encoding/decoding target samples, which may be used to train the prediction model, may be the same as the examples of FIG. 7.

The feature decoding device 20 may predict the current block by using the trained prediction model (S920). The feature decoding device 20 may reconstruct the current block based on a prediction block for the current block and a residual block (S930). The residual block may be derived based on residual information that is signaled from the feature encoding device 10.

## Embodiment 1

Embodiment 1 corresponds to a method for training a prediction model by using reconstructed neighbor samples and then performing prediction through the trained prediction model.

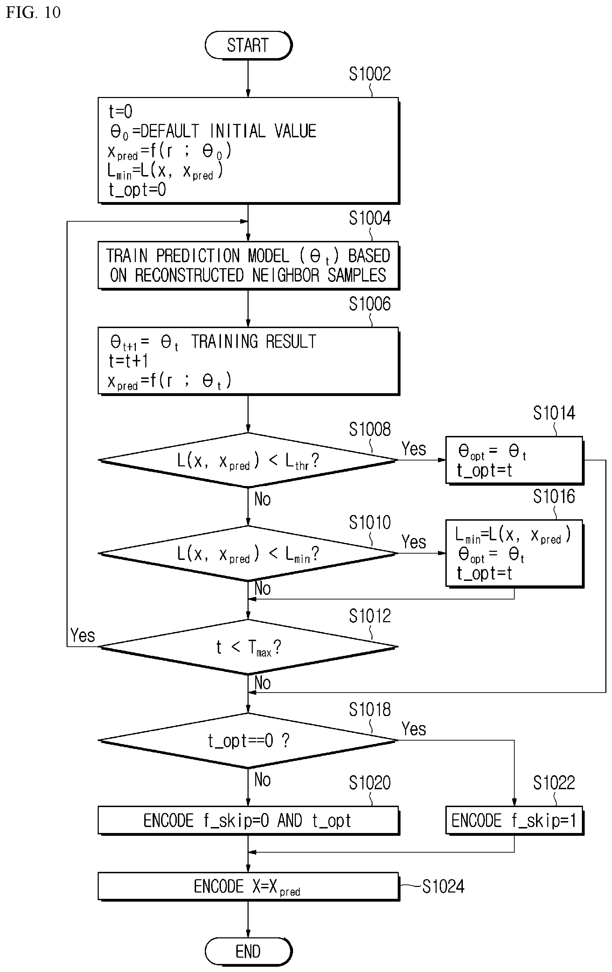

FIG. 10 is a flowchart showing a feature encoding method according to Embodiment 1. The feature encoding method of FIG. 10 shows a process of training a parameter $\theta_t$ of a prediction model, predicting current samples and encoding a difference thereof.

Referring to FIG. 10, diverse variables available for training a prediction model may be configured (S1002), and the prediction model may be trained based on reconstructed neighbor samples (S1004). Training of the parameter $\theta_t$ of the prediction model (S1004) may start with an initial value $\theta_0$ and proceed to reduce a loss function $L_{tr}$ as exemplified by Equation 2.

The prediction model with the initial value $\theta_0$ may be a 'first prediction model'. According to embodiments, the first prediction model may be a prediction with the initial value $\theta_0$ or a prediction model that is derived as a result of previous training when training of the prediction model is repeated. Accordingly, training of the prediction model may include a process of predicting a current block based on reconstructed neighbor samples and the first prediction model.

The loss function $L_{tr}$ as exemplified in Equation 2 may correspond to a value that is derived based on a difference prediction samples and reconstructed neighbor samples. Accordingly, the training of the prediction model may include a process of training the first model such that a value derived based on a difference between prediction samples and reconstructed neighbor samples is reduced.

A training result may be stored as $\theta_{t+1}$, and such processes may be performed repeatedly (t = t+1) (S1006). The forgoing processes may be repeatedly performed a predefined number of times $T_{max}$ (S1012), and a prediction value $x_{pred}$ of Equation 1 may be derived by using a prediction model to which a reconstructed neighbor sample r and a training result $\theta_t$ are applied (S1006). In addition, as shown in Equation 3, a loss function $L(x, x_{pred})$ relative to values x of current samples may be derived in the form of L2 Norm (S1008).

[Equation 3]

$$L(x, x_{pred}) = \| x - x_{pred} \|_2$$

The loss function of Equation 3 is merely one example for convenience of description, and a different equation may be used.

A minimum value of the loss function $L(x, x_{pred})$ may be $L_{min}$, a value $\theta_t$ of a corresponding time may be set to $\theta_{opt}$, and t of the corresponding time may be set as t_opt (information on the number of times) (S1016). Alternatively, in case a value of the loss function $L(x, x_{pred})$ is smaller than a predefined threshold value $L_{thr}$ (S1008), training may not be performed a maximum number of times $T_{max}$ (S1012), then the value $\theta_t$ of a corresponding time may be set to $\theta_{opt}$, and t of the corresponding time may be set as t_opt (S1014).

An intra prediction result $x_{pred}$ for encoding may be derived as shown in Equation 4, and a difference $x_{diff}$ between a value x of current samples and a prediction value $x_{pred}$ may be derived as shown in Equation 5.

[Equation 4]

$$x_{pred} = f(r; \theta_{opt})$$

[Equation 5]

$$x_{diff} = x - x_{pred}$$

The difference $x_{diff}$ may be encoded (S1024) and be signaled from the feature encoding device 10 to the feature decoding device 20. In addition, if, in decoding, a training process is repeated as many times as in encoding, a same training result $\theta_t$ as the encoding may be derived, and as this may be applied to prediction, t_opt may also be encoded (S1020) and be signaled from the feature encoding device 10 to the feature decoding device 20.

If t_opt==0 (S1018), f_skip (first flag), which is a flag indicating that the training process of the prediction model does not need to be performed, may be encoded (S1022) and be signaled from the feature encoding device 10 to the feature decoding device 20. In this case, encoding of t_opt may be skipped.

According to embodiments, a default value of t_opt may be predefined in the feature encoding device 10 and the feature decoding device 20. In this case, t_opt may not be encoded. In addition, although FIG. 10 describes a case in which only one prediction model is defined, a plurality of prediction models may be defined, and this case may have an index that is encoded to select any one from the plurality of prediction models.

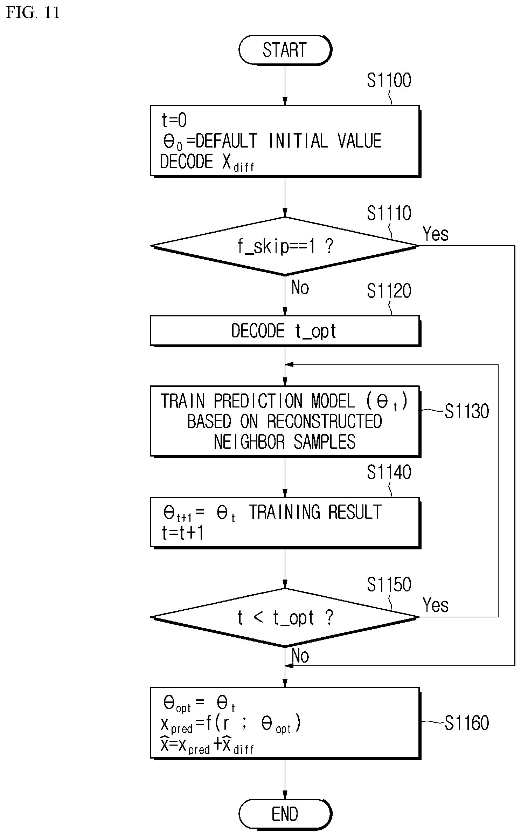

FIG. 11 is a flowchart showing a feature decoding method according to Embodiment 1. The feature decoding method of FIG. 11 shows a process of training a parameter $\theta_t$ of a prediction model, predicting current samples and reconstructing the current samples by using a decoded difference.

Referring to FIG. 11, diverse variables available for training a prediction model may be configured (S1100), and the prediction model may be trained based on reconstructed neighbor samples (S1030). Like in a feature encoding method, when the parameter $\theta_t$ of the prediction model is trained, it is possible to repeatedly perform a process (S1140) of starting from an initial value $\theta_0$, proceeding to reduce a loss function $L_{tr}$ as exemplified in Equation 2, and storing a training result as $\theta_{t+1}$.

The prediction model with the initial value θ0 may be a 'first prediction model'. According to embodiments, the first prediction model may be a prediction with the initial value θ0 or a prediction model that is derived as a result of previous training when training of the prediction model is repeated. Accordingly, training of the prediction model may include a process of predicting a current block based on reconstructed neighbor samples and the first prediction model.

The loss function $L_{tr}$ as exemplified in Equation 2 may correspond to a value that is derived based on a difference prediction samples and reconstructed neighbor samples. Accordingly, the training of the prediction model may include a process of training the first model such that a value derived based on a difference between prediction samples and reconstructed neighbor samples is reduced.

When the training process is repeated as many times as a number indicated by the decoded t_opt (S1120) (S1150), the feature decoding device 20 may consequently obtain a same prediction model parameter as $\theta_{t\_opt}$ used by the feature encoding device 10 for prediction. As the training process is repeated as many times as the number indicated by t_opt and prediction is performed using the result, a same prediction value $x_{pred}$ as in the feature encoding device 10 may be derived as shown in Equation 6 (S1160).

[Equation 6]

$$x_{pred} = f(r; \theta_{t\_opt})$$

Alternatively, in case a f_skip (first flag), which is a flag indicating that no separate prediction model parameter training process is needed, has a value of 1 (S1110), the decoding of t_opt (S1120) and the training process of $\theta_{t\_opt}$ (S1130, S1140, S1150) may be skipped, and prediction is performed using an initial default value of a prediction model so that the prediction value $x_{pred}$ may be derived (S1160).

As shown in Equation 7, by using the prediction value $x_{pred}$ and a decoded difference $\hat{x}_{diff}$, reconstructed values of current samples $\hat{x}$ may be derived.

[Equation 7]

$$\hat{x} = x_{pred} + \hat{x}_{diff}$$

According to embodiments, a default value of t_opt may be predefined in the feature encoding device 10 and the feature decoding device 20. In this case, t_opt may not be decoded. In addition, although FIG. 11 describes a case in which only one prediction model is defined, a plurality of prediction models may be defined, and this case may have an index that is decoded to select any one from the plurality of prediction models.

Table 1 and Table 2 show examples of syntax elements that are signaled to perform a feature encoding method and a feature decoding method according to Embodiment 1. Specifically, Table 1 shows syntax elements that indicate whether or not training-based intra prediction is used within a video sequence. Table 1 shows SPS-level syntax elements indicating whether or not training-based intra prediction is used and a size of an available block, but this is merely one example, and the syntax elements may be defined in other levels such as PPS, picture header, slice header, and the like. Table 2 shows syntax elements indicating whether or not an intra prediction mode of an individual CU is training-based intra prediction, an index of a used prediction model, whether or not an additional prediction model parameter is trained, and a number of trainings.

[Table 1]

| seq_parameter_set_rbsp( ) { | Descriptor |
|---|---|
| ... | |
| **sps_lip_enabled_flag** | **u(l)** |
| if(sps_lip_enable_flag) { | |
| **sps_lip_enabled_greater_flag** | **u(l)** |
| ... | |
| } | |
| ... | . |
| } | |

[Table 2]

| coding_unit(x0, y0, cbWidth, cbHeight, ...) { | Descriptor |
|---|---|
| ... | |
| if(sps_lip_enabled_flag && (sps_lip_enagled_greater_flag ‖ (cbWidth <= 4 && cbHeight <=4))) { | |
| coding_unit(x0, y0, ...) { | Descriptor |
| ... | |
| if(sps_lip_enabled_flag) { | |
| **intra_lip_flag** | **ae(v)** |
| if(intra_lip_flag) { | |
| **intra_lip_model_idx**[ x0 ][ y0 ] | **ae(v)** |
| **intra_lip_skip_learning_flag** | **ae(v)** |
| if(intra_lip_skip_learning_flag == 0) { | |
| **intra_lip_num_itr**[ x0 ][ y0 ] | **ue(v)** |
| } | |
| } | |

(continued)

| | |
|---|---|
| } | |
| ... | |
| } | |

sps_lip_enabled_flag indicates whether or not training-based intra prediction is used within a video sequence. sps_lip_enabled_greater_flag indicates whether or not training-based intra prediction can be used in a block greater than a predefined size within a video sequence. Table 4 describes that a predefined size is 4 and the number of sps_lip_enabled_greater_flag is 1, but this is merely one example for convenience of description. That is, a predefined size may be defined as another value, and there may be a plurality of sps_lip_enabled_greater_flags for various block sizes.

intra_lip_flag (intra prediction mode information) indicates whether or not a prediction mode of a corresponding CU is training-based intra prediction. intra_lip_model_idx (prediction model information) indicates an index of a predefined prediction model that will be used when training-based intra prediction is applied to a corresponding CU. intra_lip_model_idx may indicate a prediction model, among at least one or more candidate prediction models, which will be used as a first prediction model. intra_lip_skip_learning_flag (first flag) indicates whether or not an additional training process for a prediction model parameter is needed in decoding a corresponding CU, and this is a syntax element corresponding to f_skip. When intra_lip_skip_learning_flag has a value of 0, it indicates that additional training should be performed, and when intra_lip_skip_learning_flag has a value of 1, it indicates that prediction is performed by using an initial default value of a corresponding prediction model parameter without no further training. intra_lip_num_itr indicates a number of times (times information) training is performed using samples of a CU, which are reconstructed when the CU is decoded, and a determined prediction model. intra_lip_num_itr is a syntax element corresponding to t_opt. intra_lip_num_itr may be encoded in various manners such as by encoding a value of t_opt as it is or showing a difference from a default value (a default number of times) like in t_opt = a default value + intra_lip_num_itr.

### Embodiment 2

Embodiment 2 proposes a method of storing a trained parameter (or a trained prediction model) in a list, a method of performing training by using any one of prediction models stored in the list as an initial value of training, and a method of performing prediction by using any one of prediction models stored in the list without a process of performing training.

A list, in which a trained prediction model or a non-trained prediction model is stored, may be referred to as a 'prediction model candidate list' or a 'parameter list T', and a prediction model selected from prediction models in a prediction model candidate list may be referred to as a 'first prediction model'.

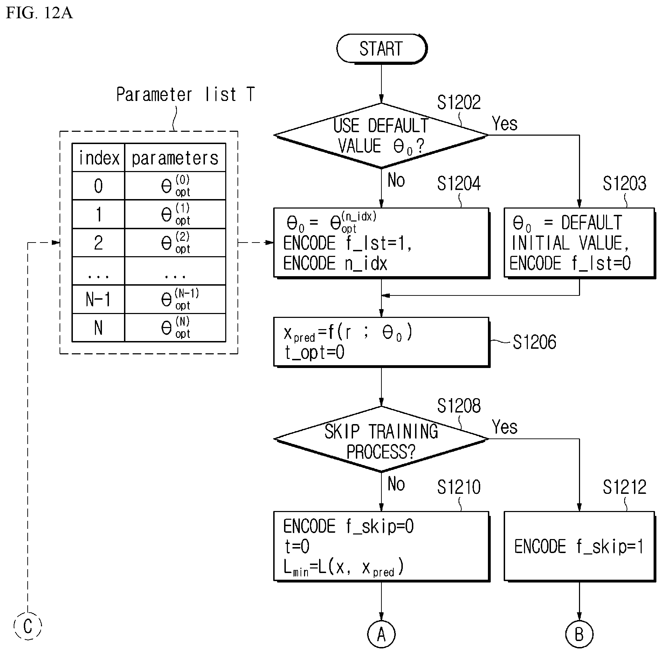

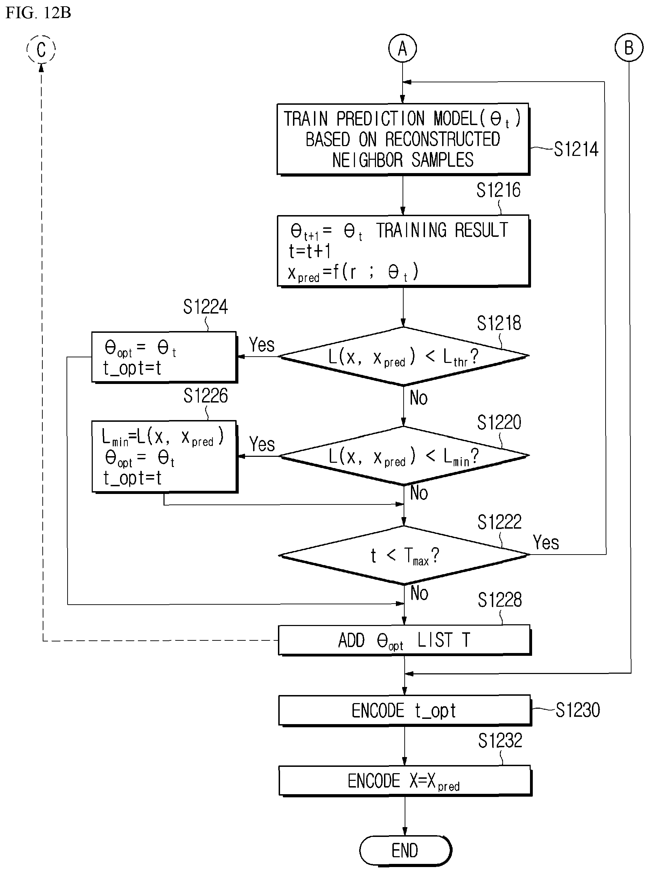

FIG. 12A and FIG. 12B are a flowchart showing a feature encoding method according to Embodiment 2. The feature encoding method of FIG. 12 shows a process of selecting and training a parameter $\theta_t$ of a prediction model, predicting current samples and encoding a difference thereof.

Referring to FIG. 12A and FIG. 12B, prediction models, which are used to predict reconstructed blocks, may be stored in a prediction model candidate list (or parameter list T) (S1228). That is, the prediction model candidate list may include at least one prediction model candidate that is used to predict at least one neighbor block. For example, if a block n is completely encoded and a parameter $\theta_{opt}^{(n)}$ is used for prediction when the block is encoded, the prediction model candidate list may have values of $T = \left\{ \theta_{opt}^{(0)}, \theta_{opt}^{(1)}, \theta_{opt}^{(2)}, ..., \theta_{opt}^{(N-1)} \right\}$ stored in it at a time when the block n is encoded. For convenience of description, FIG. 12A and FIG. 12B describe that every $\theta_{opt}^{(n)}$ is stored in the prediction model candidate list, but only a portion of $\theta_{opt}^{(n)}$ may be stored or an old item may be deleted according to a predetermined rule.

Like in Equation 2, training of a parameter $\theta_t$ of a prediction model may be performed to reduce a loss function $L_{tr}$ (S1214), and a training result may be stored as $\theta_{t+1}$ (S1216). In addition, these processes may be performed repeatedly. In this case, an initial value $\theta_0$ of training may start from a default initial value like in Embodiment 1 or start with $\theta_{opt}^{(n\_idx)}$ that is an n_idx-th parameter among parameters stored in the prediction model candidate list. That is, a first prediction model may be determined based on one of the prediction model candidate list or a predetermined prediction model. Specifically, a first prediction model corresponding to an initial value of training may be determined as a predetermined prediction model (default initial value) or be determined as an n_idex-th prediction model among prediction models stored in the prediction model candidate list.

The corresponding processes may be repeatedly performed a predefined number of times $T_{max}$ (S1222), and a prediction value $x_{pred}$ may be derived by using a prediction model to which reconstructed neighbor samples r and a training result $\theta_t$ are applied, as in Equation 1 (S1216). In addition, as exemplified in Equation 3, a loss function $L(x, x_{pred})$ relative to values x of current samples may be derived (S1218).

A minimum value of the loss function $L(x, x_{pred})$ may be $L_{min}$, a value $\theta_t$ of a corresponding time may be set to $\theta_{opt}$, and t of the corresponding time may be set as t_opt (information on the number of times) (S1226). Alternatively, in case a value of the loss function $L(x, x_{pred})$ is smaller than a predefined threshold value $L_{thr}$ (S1218), training may not be performed a maximum number of times $T_{max}$ (S1222), then the value $\theta t$ of a corresponding time may be set to $\theta_{opt}$, and t of the corresponding time may be set as t_opt (S1224).

According to embodiments, without a training process of a prediction model, prediction may be performed using a predefined default initial value as it is, or prediction may be performed using $\theta_{opt}^{(n\_idx)}$ that is an n_idx-th prediction model among prediction models in a prediction model candidate list (S1204).

As exemplified in Equation 4 and Equation 5, a prediction result $x_{pred}$ and a difference $x_{diff}$ between a value x of current samples and $x_{pred}$ may be derived. The difference $x_{diff}$ may be encoded (S1232) and be signaled from the feature encoding device 10 to the feature decoding device 20. In addition, if, in decoding, a training process is repeated as many times as in encoding, a same training result $\theta_t$ as the encoding may be derived, and as this may be applied to prediction, t_opt may also be encoded (S1230) and be signaled from the feature encoding device 10 to the feature decoding device 20. If t_opt==0 (S1208), f_skip (first flag), which is a flag indicating that the training process of the prediction model does not need to be performed, may be encoded (S1212) and be signaled from the feature encoding device 10 to the feature decoding device 20. In this case, encoding of t_opt may be skipped.

As shown in FIG. 12A and FIG. 12B, prior to a training process, it may be determined whether an initial value $\theta_0$ of prediction model training starts from a default initial value or from one of prediction models in a prediction model candidate list, or whether a prediction model in a prediction model candidate list is to be used as it is while the training process is skipped (S1202 and S1203). However, this is merely one example, and an encoding process (or training process) may be performed in part or in whole, and then a more efficient method may be selected and performed. In such an example, in case $\theta_{opt}$ used for prediction is a result value that has been subject to an additional training process, $\theta_{opt}$ may be added to a prediction model candidate list.

Although not expressed in FIG. 12A and FIG. 12B, there may be conditions for adding $\theta_{opt}$ to a prediction model candidate list. In addition, there may be conditions for deleting some of $\theta_{opt}^{(n)}$ stored in a prediction model candidate list from the prediction model candidate list.

A value f_list, which indicates whether training and prediction are performed using a prediction model stored in a prediction model candidate list or prediction is performed using a default initial value, may be encoded (S1203 and S1204) and signaled from the feature encoding device 10 to the feature decoding device 20. In this case, an index n_idx (selection information) indicating the prediction model used for prediction may be encoded (S1204) and signaled from the feature encoding device 10 to the feature decoding device 20.

According to embodiments, a default value of t_opt may be predefined in the feature encoding device 10 and the feature decoding device 20. In this case, t_opt may not be encoded. In addition, although FIG. 12A and FIG. 12B describe a case in which only one prediction model is defined, a plurality of prediction models may be defined, and this case may have an index that is encoded to select any one from the plurality of prediction models. In addition, there may be a plurality of prediction model candidate lists.

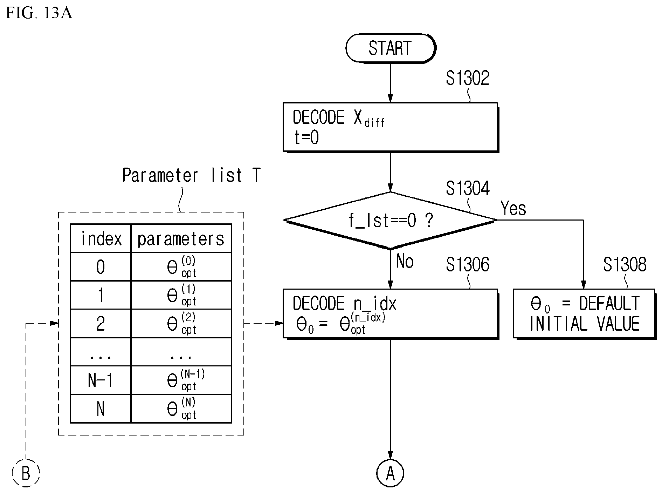

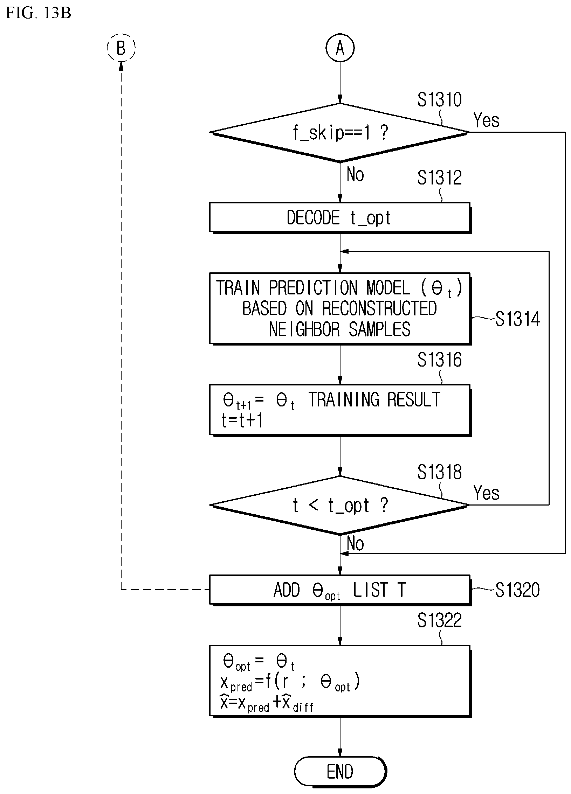

FIG. 13A and FIG. 13B are a flowchart showing a feature decoding method according to Embodiment 2. The feature decoding method of FIG. 13A and FIG. 13B shows a process of selecting and training a parameter $\theta_t$ of a prediction model, predicting current samples and reconstructing the current samples by using a decoded difference.

Referring to FIG. 13A and FIG. 13B, $x_{diff}$ may be decoded, and t=0 may be set (S1302). Depending on a value of f_list, which is a flag indicating whether or not training and prediction are performed using a prediction model stored in a prediction model candidate list (S1304), an initial value $\theta_0$ of a prediction model parameter may be determined. Specifically, when f_list==1, the index n_idx (selection information) may be decoded, and the initial value $\theta_0$ of the prediction model parameter may be determined as a prediction model $\theta_{opt}^{(n\_idx)}$ indicated by n_idx in the prediction model candidate list. When f_list==0, the initial value $\theta_0$ of the prediction model parameter may be determined as a predefined default value (S1308).

Like in a feature encoding method, as exemplified in Equation 3, training of the parameter $\theta_t$ of the prediction model (S1314) may be repeatedly performed to reduce a loss function $L_{tr}$ and store a training result as $\theta_{t+1}$ (S1316). When

the training process is repeated as many times as a number indicated by the decoded t_opt (S1312) (S1318), the feature decoding device 20 may consequently obtain a same prediction model parameter as $\theta_{opt}$ used by the feature encoding device 10 for prediction. Alternatively, when f_skip (first flag), which is a flag indicating that no separate training process is needed, is decoded by a value of 1 (S1310), the decoding of t_opt and the training of a prediction model parameter may not be performed depending on a value of f_list (S1304), and a default value of the prediction model or an n_idx-th prediction model $\theta_{opt}^{(n\_idx)}$ in a prediction model candidate list may be used as $\theta_{opt}$.

As the training process is repeated as many times as the number indicated by t_opt and prediction is performed using the result, a same prediction value $x_{pred}$ as in the feature encoding device 10 may be derived as shown in Equation 6 (S1322). In addition, as shown in Equation 7, by using the prediction value $x_{pred}$ and a decoded difference $\hat{x}_{diff}$, reconstructed values of current samples $\hat{x}$ may be derived (S 1322).

According to embodiments, a default value of t_opt may be predefined in the feature encoding device 10 and the feature decoding device 20. In this case, t_opt may not be decoded. In addition, although FIG. 13A and FIG. 13B describe a case in which only one prediction model is defined, a plurality of prediction models may be defined, and this case may have an index that is decoded to select any one from the plurality of prediction models. In addition, there may be a plurality of prediction model candidate lists.

When f_skip==0 (S1310), $\theta_{opt}$ used for prediction may be added to a prediction model candidate list (S1320). Although not expressed in FIG. 13A and FIG. 13B, there may be a condition for adding $\theta_{opt}$ to a prediction model candidate list. In addition, there may be conditions for deleting some of $\theta_{opt}^{(n)}$ stored in a prediction model candidate list from the prediction model candidate list.

Table 3 and Table 4 show examples of syntax elements that are signaled to perform a feature encoding method and a feature decoding method according to Embodiment 2. Specifically, Table 3 shows syntax elements that indicate whether or not training-based intra prediction is used within a video sequence, and a size of a block to which training-based intra prediction is applicable. Table 3 shows SPS-level syntax elements, but this is merely one example, and the syntax elements may be defined in other levels such as PPS, picture header, slice header, and the like. Table 4 shows syntax elements indicating whether or not an intra prediction mode of an individual CU is training-based intra prediction, an index of a used prediction model, whether or not a prediction model stored in a prediction model candidate list is used, whether or not an additional prediction model parameter is trained, and a number of trainings.

[Table 3]

| seq_parameter_set_rbsp( ) { | Descriptor |
|---|---|
| ... | |
| **sps_lip_enabled_flag** | **u(1)** |
| if(sps_lip_enabled_flag) { | |
| **sps_lip_enabled_grater_flag** | **u(1)** |
| **sps_lip_parm_list_flag** | **u(1)** |
| } | |
| ... | |
| } | |

[Table 4]

| coding_unit(x0, y0, ...) { | Descriptor |
|---|---|
| ... | |
| if(sps_lip_enabled_flag && (sps_lip_enagled_greater_flag ‖ (cbWidth <= 4 && cbHeight <-4))) { | |
| if(sps_lip_enabled_flag) { | |
| **intra_lip_flag** | **ae(v)** |
| if(intra_lip_flag) { | |
| **intra_lip_model_idx**[ x0 ][ y0 ] | **ae(v)** |
| if(sps_lip_parm_list_flag) { | |

(continued)

| | |
|---|---|
| **intra_lip_parm_from_list_flag** | **ae(v)** |
| if(intra_lip_parm_from_list_flag) { | |
| **intra_lip_parm_idx**[ x0 ][ y0 ] | ae(v) |
| } | |
| } | |
| **intra_lip_skip_learning_flag** | **ae(v)** |
| if(intra_lip_skip_learning_flag = 0) { | |
| **intra_lip_num_itr**[ x0 ][ y0 ] | **ue(v)** |
| } | |
| } | |
| } | |
| ... | |
| } | |

sps_lip_enabled_flag indicates whether or not training-based intra prediction is used within a video sequence. sps_lip_enabled_greater_flag indicates whether or not training-based intra prediction can be used in a block greater than a predefined size within a video sequence. Table 3 describes that a predefined size is 4 and the number of sps_lip_enabled_greater _flag is 1, but this is merely one example for convenience of description. That is, a predefined size may be defined as another value, and there may be a plurality of sps_lip_enabled_greater_flags for various block sizes. sps_lip_parm_list_flag (first flag) indicates whether or not a prediction model stored in a prediction model candidate list is used in a video sequence.

intra_lip_flag (intra prediction mode information) indicates whether or not a prediction mode of a corresponding CU is training-based intra prediction. intra_lip_model_idx (prediction model information) indicates an index of a predefined prediction model that will be used when training-based intra prediction is applied to a corresponding CU. intra_lip_model_idx may indicate a prediction model, among at least one or more candidate prediction models, which will be used as a first prediction model. intra _lip_parm_from_list_flag indicates whether or not a value stored in a prediction model candidate list in decoding a corresponding CU is used as an initial value of a prediction model parameter. intra_lip_parm_from_list_flag is a syntax element corresponding to f_lst. When intra _lip_parm_from_list_flag==0, a default initial value is used, and when intra_lip_parm_from_list_flag==1, an index indicating a value stored in a prediction model candidate list is additionally decoded. intra_lip_parm_idx is a syntax element indicating a prediction model, among prediction models stored in a prediction model candidate list, which will be used as an initial value for decoding a current CU. intra_lip_parm_idx is a syntax element corresponding to n_idx (selection information). intra_lip_skip_learning_flag (first flag) indicates whether or not an additional training process for a prediction model parameter is needed in decoding a corresponding CU, and this is a syntax element corresponding to f_skip. When intra_lip_skip_learning_flag has a value of 0, it indicates that additional training should be performed, and when intra_lip_skip_learning_flag has a value of 1, it indicates that prediction is performed by using an initial default value of a corresponding prediction model parameter without no further training. intra_lip_num_itr indicates a number of times (times information) training is performed using samples of a CU, which are reconstructed when the CU is decoded, and a determined prediction model. intra_lip_num_itr is a syntax element corresponding to t_opt. intra_lip_num_itr may be encoded in various manners such as by encoding a value of t_opt as it is or showing a difference from a default value (a default number of times) like in t_opt = a default value + intra_lip_num_itr.

## Embodiment 3

The foregoing embodiments have described encoding of f_skip (first flag) that is a flag indicating that, if t_opt==0, no training process of a prediction model needs to be performed in a decoding process.

According to embodiments, t_opt==0 indicates that training is performed zero time, and this may indicate that no training is performed. Accordingly, when no training is performed, the feature encoding device 10 may encode a value of t_opt in 0, and the feature decoding device 20 may not perform training when the value of t_opt is 0. In addition, when the value of t_opt is 0, f_skip may not be encoded and decoded.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Embodiments described in the present disclosure may be implemented and performed on a processor, microprocessor, controller, or chip. For example, the functional units shown in each drawing may be implemented and performed on a computer, processor, microprocessor, controller, or chip. In this case, information for implementation (e.g., information on instructions) or algorithm may be stored in a digital storage medium.

In addition, the decoder (decoding apparatus) and the encoder (encoding apparatus), to which the embodiment(s) of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, an argument reality (AR) device, a video telephony video device, a transportation terminal (e.g., vehicle (including autonomous vehicle) terminal, robot terminal, airplane terminal, ship terminal, etc.) and a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

Additionally, a processing method to which the embodiment(s) of the present disclosure is applied may be produced in the form of a program executed by a computer and stored in a computer-readable recording medium. Multimedia data having a data structure according to the embodiment(s) of this document may also be stored in a computer-readable recording medium. Computer-readable recording media include all types of storage devices and distributed storage devices that store computer-readable data. Computer-readable recording media include, for example, Blu-ray Disc (BD), Universal Serial Bus (USB), ROM, PROM, EPROM, EEPROM, RAM, CD-ROM, magnetic tape, floppy disk, and optical data storage device. Additionally, computer-readable recording media include media implemented in the form of carrier waves (e.g., transmission via the Internet). Additionally, the bitstream generated by the encoding method may be stored in a computer-readable recording medium or transmitted through a wired or wireless communication network.

Additionally, the embodiment(s) of the present disclosure may be implemented as a computer program product by program code, and the program code may be executed on a computer by the embodiment(s) of the present disclosure. The program code may be stored on a carrier readable by a computer.

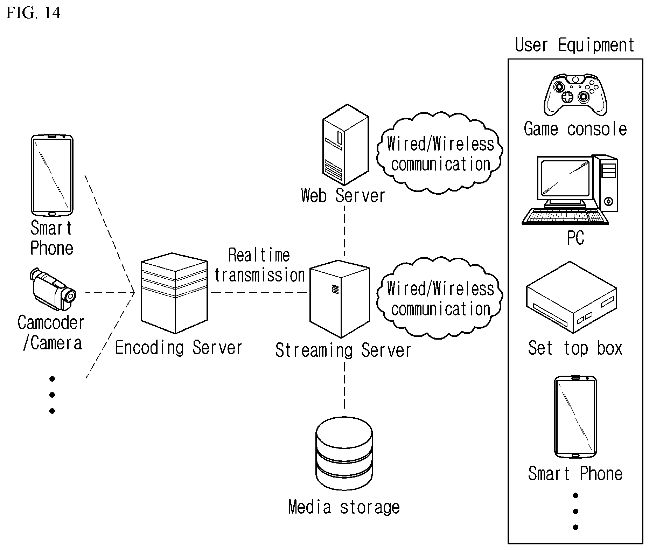

FIG. 14 is a view illustrating an example of a content streaming system to which embodiments of the present disclosure are applicable.

Referring to FIG. 14, the content streaming system, to which the embodiment of the present disclosure is applied, may largely include an encoding server, a streaming server, a web server, a media storage, a user device, and a multimedia input device.

The encoding server compresses contents input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the contents streaming system may include a separate control server. In this case, the control server serves to control a command/response between devices in the contents streaming system.

The streaming server may receive contents from a media storage and/or an encoding server. For example, when the contents are received from the encoding server, the contents may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the contents streaming system may be operated as a distributed server, in which case data received from each server may be distributed.

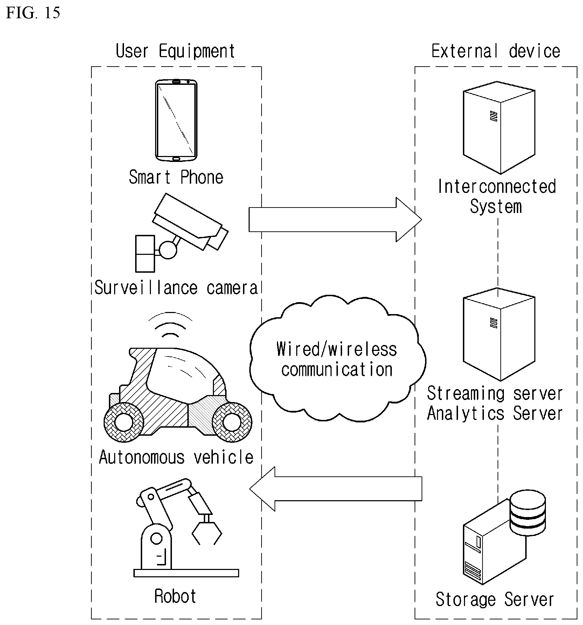

FIG. 15 is a diagram illustrating another example of a content streaming system to which embodiments of the present disclosure are applicable.

Referring to FIG. 15, in an embodiment such as VCM, a task may be performed in a user terminal or a task may be performed in an external device (e.g., streaming server, analysis server, etc.) according to the performance of the device, the user's request, the characteristics of the task to be performed, etc. In this way, in order to transmit information necessary to perform a task to an external device, the user terminal may generate a bitstream including information necessary to perform the task (e.g., information such as task, neural network and/or usage) directly or through an encoding server.

In an embodiment, the analysis server may perform a task requested by the user terminal after decoding the encoded information received from the user terminal (or from the encoding server). At this time, the analysis server may transmit the result obtained through the task performance back to the user terminal or may transmit it to another linked service server (e.g., web server). For example, the analysis server may transmit a result obtained by performing a task of determining a fire to a fire-related server. In this case, the analysis server may include a separate control server. In this case, the control server may serve to control a command/response between each device associated with the analysis server and the server. In addition, the analysis server may request desired information from a web server based on a task to be performed by the user device and the task information that may be performed. When the analysis server requests a desired service from the web server, the web server transmits it to the analysis server, and the analysis server may transmit data to the user terminal. In this case, the control server of the content streaming system may serve to control a command/response between devices in the streaming system.

**Industrial Applicability**

The embodiments of the present disclosure may be used to encode or decode a feature/feature map.

**Claims**

1. A feature decoding method performed by a feature decoding apparatus, the feature decoding method comprising:

   training a prediction model based on reconstructed neighbor samples;
   predicting a current block by using the trained prediction model; and
   reconstructing the current block based on residual information of the current block and the predicted current block.

2. The feature decoding method of claim 1, wherein the training comprises:

   predicting the current block based on the reconstructed neighbor samples and a first prediction model; and
   training the first prediction model such that a value derived based on a difference between the predicted current block and the reconstructed neighbor samples is reduced.

3. The feature decoding method of claim 2, wherein the first prediction model is trained as many times as derived based on information on a number of times, and
   wherein the information on the number of times is obtained from a bitstream.

4. The feature decoding method of claim 3, wherein the information on the number of times indicates a number of times, which is obtained by subtracting a predetermined default number of times from the times the first prediction model is trained.

5. The feature decoding method of claim 1, wherein training is performed based on prediction mode information that is obtained from a bitstream and indicates that a prediction mode of the current block is training-based prediction.

6. The feature decoding method of claim 2, wherein the first prediction model is a prediction model indicated by prediction model information obtained from a bitstream, among at least one or more candidate prediction models.

7. The feature decoding method of claim 2, wherein, the first prediction model is determined based on one of a prediction model candidate list or a predetermined prediction model.

8. The feature decoding method of claim 7, wherein the first prediction model is determined based on the prediction model candidate list based on a value of a first flag being obtained from a bitstream and being a first value, and wherein the first prediction model is determined based on the predetermined prediction model based on the value of the first flag being a second value.

9. The feature decoding method of claim 7,

   wherein the prediction model candidate list includes at least one prediction model candidate that is used to predict at least one neighbor block, and
   wherein the first prediction model is determined as a prediction model candidate indicated by selection information obtained from a bitstream among the at least one prediction model candidate.

10. A feature encoding method performed by a feature encoding apparatus, the feature encoding method comprising:

   training a prediction model based on reconstructed neighbor samples;
   predicting a current block by using the trained prediction model; and
   encoding residual information that is derived based on the current block and the predicted current block.

11. A computer-readable recording medium for storing a bitstream generated by the feature encoding method of claim 10.

12. A method for transmitting a bitstream generated by a feature encoding method,
   wherein the feature encoding method comprises:

   training a prediction model based on reconstructed neighbor samples;
   predicting a current block by using the trained prediction model; and
   encoding residual information that is derived based on the current block and the predicted current block.

FIG. 1

FIG. 2

FIG. 3

BITSTREAM

ENCODER 300

IMAGE PARTITIONER 310

INPUT IMAGE (PICTURE)

331 330

TRANSFORMER 332

QUANTIZER 333

ENTROPY ENCODER 340

INTER PREDICTOR (321)

INTRA PREDICTOR (322)

320

DPB

MEMORY

370

FILTER 360

INVERSE TRANSFORMER 335

DEQUANTIZER 334

350

EP 4 589 949 A1

FIG. 4

FIG. 5

```
                    ┌──────────┐
                    │  START   │
                    └────┬─────┘
                         │          S510
         ┌───────────────▼───────────────┐
         │          PREDICTION           │
         └───────────────┬───────────────┘
                         │          S520
         ┌───────────────▼───────────────┐
         │      RESIDUAL PROCESSING      │
         └───────────────┬───────────────┘
                         │          S530
         ┌───────────────▼───────────────┐
         │   ENCODE FEATURE/FEATURE MAP  │
         │ INFORMATION INCLUDING PREDICTION │
         │ INFORMATION AND RESIDUAL INFORMATION │
         └───────────────┬───────────────┘
                         │
                    ┌────▼─────┐
                    │   END    │
                    └──────────┘
```

FIG. 6

```
                    ┌──────────┐
                    │  START   │
                    └────┬─────┘
                         │          S610
         ┌───────────────▼───────────────┐
         │    ACQUIRE FEATURE/FEATURE MAP │
         │   INFORMATION FROM BITSTREAM   │
         └───────────────┬───────────────┘
                         │          S620
         ┌───────────────▼───────────────┐
         │          PREDICTION           │
         └───────────────┬───────────────┘
                         │          S630
         ┌───────────────▼───────────────┐
         │      RESIDUAL PROCESSING      │
         └───────────────┬───────────────┘
                         │          S640
         ┌───────────────▼───────────────┐
         │ FEATURE/FEATURE MAP RECONSTRUCTION │
         └───────────────┬───────────────┘
                         │          S650
         ┌───────────────▼───────────────┐
         │   IN-LOOP FILTERING (OPTIONAL) │
         └───────────────┬───────────────┘
                         │
                    ┌────▼─────┐
                    │   END    │
                    └──────────┘
```

FIG. 7

FIG. 8

FIG. 9

FIG. 10

```
                    ┌──────────┐
                    │  START   │
                    └────┬─────┘
                         │                          S1002
        ┌────────────────▼─────────────────┐
        │ t=0                              │
        │ θ_0=DEFAULT INITIAL VALUE        │
        │ x_pred=f(r ; θ_0)                │
        │ L_min=L(x, x_pred)               │
        │ t_opt=0                          │
        └────────────────┬─────────────────┘
                         │                          S1004
        ┌────────────────▼─────────────────┐
        │ TRAIN PREDICTION MODEL (θ_t) BASED│
        │ ON RECONSTRUCTED NEIGHBOR SAMPLES │
        └────────────────┬─────────────────┘
                         │                          S1006
        ┌────────────────▼─────────────────┐
        │ θ_{t+1}= θ_t  TRAINING RESULT    │
        │ t=t+1                            │
        │ x_pred=f(r ; θ_t)                │
        └────────────────┬─────────────────┘
```

$t=0$
$\theta_0 =$ DEFAULT INITIAL VALUE
$x_{pred}=f(r ; \theta_0)$
$L_{min}=L(x, x_{pred})$
$t\_opt=0$

**S1004** — TRAIN PREDICTION MODEL ($\theta_t$) BASED ON RECONSTRUCTED NEIGHBOR SAMPLES

**S1006** —
$\theta_{t+1}= \theta_t$ TRAINING RESULT
$t=t+1$
$x_{pred}=f(r ; \theta_t)$

**S1008** — $L(x, x_{pred}) < L_{thr}$?
— Yes → **S1014** — $\theta_{opt} = \theta_t$ ; $t\_opt=t$
— No ↓

**S1010** — $L(x, x_{pred}) < L_{min}$?
— Yes → **S1016** — $L_{min}=L(x, x_{pred})$ ; $\theta_{opt} = \theta_t$ ; $t\_opt=t$
— No ↓

**S1012** — $t < T_{max}$?
— Yes → (loop back to S1004)
— No ↓

**S1018** — $t\_opt==0$?
— Yes → **S1022** — ENCODE f_skip=1
— No ↓

**S1020** — ENCODE f_skip=0 AND t_opt

**S1024** — ENCODE X=X_pred

```
                    ┌──────────┐
                    │   END    │
                    └──────────┘
```

FIG. 11

START

S1100

t=0
$\theta_0$=DEFAULT INITIAL VALUE
DECODE $X_{diff}$

S1110

f_skip==1 ?　　Yes

No　　S1120

DECODE t_opt

TRAIN PREDICTION MODEL ($\theta_t$)
BASED ON RECONSTRUCTED
NEIGHBOR SAMPLES　S1130

S1140

$\theta_{t+1}$= $\theta_t$ TRAINING RESULT
t=t+1

S1150

t < t_opt ?　　Yes

No

$\theta_{opt}$= $\theta_t$
$X_{pred}$=f(r ; $\theta_{opt}$)
$\hat{x}$=$X_{pred}$+$\hat{x}_{diff}$　S1160

END

FIG. 12A

Parameter list T

| index | parameters |
|-------|------------|
| 0 | $\Theta_{opt}^{(0)}$ |
| 1 | $\Theta_{opt}^{(1)}$ |
| 2 | $\Theta_{opt}^{(2)}$ |
| ... | ... |
| N−1 | $\Theta_{opt}^{(N-1)}$ |
| N | $\Theta_{opt}^{(N)}$ |

START

S1202 USE DEFAULT VALUE $\Theta_0$? Yes

No

S1204
$\Theta_0 = \Theta_{opt}^{(n\_idx)}$
ENCODE f_lst=1,
ENCODE n_idx

S1203
$\Theta_0$ = DEFAULT INITIAL VALUE,
ENCODE f_lst=0

S1206
$x_{pred}=f(r ; \Theta_0)$
t_opt=0

S1208 SKIP TRAINING PROCESS? Yes

No

S1210
ENCODE f_skip=0
t=0
$L_{min}=L(x, x_{pred})$

S1212
ENCODE f_skip=1

C

A

B

FIG. 12B

FIG. 13A

Parameter list T

| index | parameters |
|-------|------------|
| 0 | $\theta_{opt}^{(0)}$ |
| 1 | $\theta_{opt}^{(1)}$ |
| 2 | $\theta_{opt}^{(2)}$ |
| ... | ... |
| N-1 | $\theta_{opt}^{(N-1)}$ |
| N | $\theta_{opt}^{(N)}$ |

(B)

START

S1302
DECODE $X_{diff}$
t=0

S1304
f_lst==0 ?
Yes
No

S1306
DECODE n_idx
$\theta_0 = \theta_{opt}^{(n\_idx)}$

S1308
$\theta_0$ = DEFAULT INITIAL VALUE

(A)

FIG. 13B

FIG. 14

User Equipment

Game console

PC

Set top box

Smart Phone

Smart Phone

Camcoder /Camera

Encoding Server

Realtime transmission

Web Server

Wired/Wireless communication

Streaming Server

Wired/Wireless communication

Media storage

FIG. 15

## INTERNATIONAL SEARCH REPORT

| International application No. |
| --- |
| **PCT/KR2023/013396** |

### A. CLASSIFICATION OF SUBJECT MATTER

**H04N 19/593**(2014.01)i; **H04N 19/105**(2014.01)i; **H04N 19/132**(2014.01)i; **H04N 19/176**(2014.01)i; **H04N 19/13**(2014.01)i; **H04N 19/70**(2014.01)i; **G06T 9/00**(2006.01)i

According to International Patent Classification (IPC) or to both national classification and IPC

### B. FIELDS SEARCHED

Minimum documentation searched (classification system followed by classification symbols)

H04N 19/593(2014.01); G06N 20/00(2019.01); G06N 3/04(2006.01); G06N 3/08(2006.01); G06V 10/77(2022.01); H04N 19/105(2014.01); H04N 19/11(2014.01); H04N 19/132(2014.01); H04N 19/147(2014.01); H04N 19/159(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 특징(feature), 주변(neighbor), 샘플(sample), 예측(predict), 모델(model), 복원(reconstruct)

### C. DOCUMENTS CONSIDERED TO BE RELEVANT

| Category* | Citation of document, with indication, where appropriate, of the relevant passages | Relevant to claim No. |
| --- | --- | --- |
| Y | US 2022-0210435 A1 (HYUNDAI MOTOR COMPANY et al.) 30 June 2022 (2022-06-30)<br>See paragraphs [0006]-[0008], [0038]-[0045], [0063], [0078], [0092]-[0105], [0120] and [0236]; and figures 1-2, 6 and 16. | 1-12 |
| Y | KR 10-2021-0119514 A (GUANGDONG OPPO MOBILE TELECOMMUNICATIONS CORP., LTD.) 05 October 2021 (2021-10-05)<br>See paragraphs [0002] and [0035]; and claim 1. | 1-12 |
| Y | KR 10-2021-0066707 A (UNIST(ULSAN NATIONAL INSTITUTE OF SCIENCE AND TECHNOLOGY)) 07 June 2021 (2021-06-07)<br>See paragraphs [0043] and [0074]. | 3-4 |
| Y | KR 10-2020-0128586 A (FRAUNHOFER-GESELLSCHAFT ZUR FÖRDERUNG DER ANGEWANDTEN FORSCHUNG E. V.) 13 November 2020 (2020-11-13)<br>See paragraphs [0185], [0200] and [0203]; and figure 7a. | 6-9 |

[✓] Further documents are listed in the continuation of Box C.    [✓] See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 December 2023** | **05 December 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
|---|---|
| | **PCT/KR2023/013396** |

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0027436 A (KOREA ELECTRONICS TECHNOLOGY INSTITUTE) 08 March 2022 (2022-03-08)<br>        See claims 1-15. | 1-12 |

**INTERNATIONAL SEARCH REPORT**
Information on patent family members

International application No.

**PCT/KR2023/013396**

| Patent document cited in search report | | | Publication date (day/month/year) | Patent family member(s) | | | Publication date (day/month/year) |
|---|---|---|---|---|---|---|---|
| US | 2022-0210435 | A1 | 30 June 2022 | KR | 10-2022-0097251 | A | 07 July 2022 |
| | | | | US | 11516478 | B2 | 29 November 2022 |
| KR | 10-2021-0119514 | A | 05 October 2021 | CN | 116708794 | A | 05 September 2023 |
| | | | | EP | 3910951 | A1 | 17 November 2021 |
| | | | | JP | 2022-522487 | A | 19 April 2022 |
| | | | | JP | 7383720 | B2 | 20 November 2023 |
| | | | | US | 11778172 | B2 | 03 October 2023 |
| | | | | US | 2022-0248000 | A1 | 04 August 2022 |
| | | | | WO | 2020-186763 | A1 | 24 September 2020 |
| KR | 10-2021-0066707 | A | 07 June 2021 | KR | 10-2524547 | B1 | 24 April 2023 |
| KR | 10-2020-0128586 | A | 13 November 2020 | CN | 112204963 | A | 08 January 2021 |
| | | | | EP | 3777141 | A1 | 17 February 2021 |
| | | | | JP | 2023-052578 | A | 11 April 2023 |
| | | | | JP | 7217288 | B2 | 02 February 2023 |
| | | | | KR | 10-2023-0057481 | A | 28 April 2023 |
| | | | | KR | 10-2524593 | B1 | 21 April 2023 |
| | | | | US | 11601672 | B2 | 07 March 2023 |
| | | | | US | 2023-0254508 | A1 | 10 August 2023 |
| | | | | WO | 2019-185808 | A1 | 03 October 2019 |
| KR | 10-2022-0027436 | A | 08 March 2022 | KR | 10-2471288 | B1 | 28 November 2022 |

Form PCT/ISA/210 (patent family annex) (July 2022)